(19) Europäisches Patentamt / European Patent Office / Office européen des brevets

(11) **EP 4 768 528 A2**

(12) **EUROPEAN PATENT APPLICATION**

(43) Date of publication:
**01.07.2026 Bulletin 2026/27**

(21) Application number: **25225039.4**

(22) Date of filing: **18.12.2025**

(51) International Patent Classification (IPC):
**C08J 5/20** (2006.01)      **C08J 7/12** (2006.01)
**H01M 50/403** (2021.01)      **H01M 50/414** (2021.01)
**H01M 50/491** (2021.01)

(52) Cooperative Patent Classification (CPC):
**C08J 5/20; C08J 7/12; H01M 50/403;**
**H01M 50/414; H01M 50/491;** C08J 2323/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.12.2024 KR 20240201280**
**09.09.2025 KR 20250128601**

(71) Applicant: **SK IE Technology Co., Ltd.**
**Seoul 03161 (KR)**

(72) Inventors:
• **KO, Byoung Sun**
**34124 Daejeon (KR)**

• **KIM, Wan Joong**
**34124 Daejeon (KR)**
• **KIM, Young Rae**
**34124 Daejeon (KR)**
• **PARK, Hye Jin**
**34124 Daejeon (KR)**
• **LEE, Sin Ho**
**34124 Daejeon (KR)**
• **CHOI, Yu Mi**
**34124 Daejeon (KR)**

(74) Representative: **Prüfer & Partner mbB**
**Patentanwälte · Rechtsanwälte**
**Sohnckestraße 12**
**81479 München (DE)**

(54) **METHOD AND SYSTEM FOR PRODUCING POROUS POLYMER FILM**

(57)    A method and a system for producing a porous polymer film (20) are provided. The degree of oxygen removal within the pores of the preliminary porous film may be controlled using any one of a vacuum index $I_V$ defined by Equation 1, an impregnation index $I_L$ defined by Equation 2, and a suction index $I_S$ defined by Equation 3. Accordingly, side reactions caused by oxygen during electron beam crosslinking may be suppressed or reduced, thereby improving the chemical and mechanical properties of the porous polymer film (20) produced thereby.

FIG. 1

S10A
Prepare vacuum atmosphere chamber including electron beam irradiation unit at rear end of the chamber

S20A
Introduce first preliminary porous film (A) into vacuum atmosphere chamber

S30A
Irradiate first preliminary porous film (A) with electron beam in electron beam irradiation unit

EP 4 768 528 A2

**Description**

[BACKGROUND OF THE INVENTION]

1. Field of the Invention

The present disclosure relates to a method for producing a porous polymer film. The present disclosure further relates to a system for producing a porous polymer film.

2. Description of the Related Art

Porous polymer films are used in various industrial fields due to their microporous structure and low reactivity. For example, a porous polymer film may be used as a battery separator, in gas separation processes and devices, or as a reverse osmosis membrane, and may perform functions such as physical or electrical separation and prevention of remixing of purified products.

Recently, there has been a growing demand for porous polymer films that can maintain high durability even under extreme conditions. For example, there has been increasing interest in whether porous polymer films can maintain their performance under conditions such as extremely high or low temperatures, electrostatic environments, or conditions subject to high loads or external forces.

For example, techniques have been proposed to improve the durability of porous polymer films through surface treatment, post-processing, and other methods.

[SUMMARY OF THE INVENTION]

An object of the present disclosure is to provide a method for producing a porous polymer film having improved chemical and mechanical properties.

A method for producing a porous polymer film according to embodiments of the present disclosure includes: preparing a vacuum atmosphere chamber including an electron beam irradiation unit at a rear end of the chamber; and introducing a first preliminary porous film (A) into the vacuum atmosphere chamber, wherein the first preliminary porous film (A) passes through the vacuum atmosphere chamber under a condition in which a vacuum index $I_V$, defined by Equation 1 below, satisfies 0.1 to 3,000:

$$[\text{Equation 1}]$$

$$I_V = (V_2 / V_1) \times (1 / 100)$$

In Equation 1, $V_1$ denotes the vacuum level (torr) within the vacuum atmosphere chamber, and $V_2$ denotes the film travel time (sec) of the first preliminary porous film (A) from the time it is introduced into the vacuum atmosphere chamber until it is irradiated with an electron beam by the electron beam irradiation unit.

In one embodiment, in Equation 1, $V_1$ may be $1.0 \times 10^{-6}$ torr to $7.6 \times 10^2$ torr.

In one embodiment, in Equation 1, $V_2$ may be 1 sec to 180 sec.

In one embodiment, the production method may further include irradiating the first preliminary porous film (A) with an electron beam in the electron beam irradiation unit.

In one embodiment, while the first preliminary porous film (A) is wound in the electron beam irradiation unit, the first preliminary porous film (A) may be irradiated with an electron beam.

A method for producing a porous polymer film according to embodiments of the present disclosure includes: introducing a first preliminary porous film (B) into a liquid treatment chamber filled with a non-reactive liquid or spraying a non-reactive liquid, wherein the first preliminary porous film (B) passes through the liquid treatment chamber under a condition in which an impregnation index $I_L$, defined by Equation 2 below, satisfies 0.8 or more:

$$[\text{Equation 2}]$$

$$I_L = L_2 / L_1$$

In Equation 2, $L_1$; denotes the surface tension (mN/m) of the non-reactive liquid, and $L_2$ denotes the surface energy (mN/m) of the first preliminary porous film (B).

When discharged from the liquid treatment chamber, the thus treated porous film may be obtained as a second preliminary porous film (B).

In one embodiment, in Equation 2, $L_1$ may be 80 mN/m or less.

In one embodiment, in Equation 2, $L_2$ may be 80 mN/m or less.

In one embodiment, in Equation 2, an absolute value of a difference between $L_1$ and $L_2$ ($|L_2-L_1|$) may be 20 mN/m or less.

In one embodiment, the non-reactive liquid includes at least one organic solvent selected from organic solvents having a boiling point of 40°C or higher, and optionally 300°C or less.

In one embodiment, the non-reactive liquid may include at least one selected from the group consisting of propylene glycol, n-hexane, n-heptane, n-octane, n-nonane, cyclohexane, methylcyclohexane, toluene, xylene, ethylbenzene, ethyl acetate, butyl acetate, isobutyl acetate, sec-butyl acetate, diisopropyl ether, dimethyl carbonate, isopropyl acetate, methyl isobutyl ketone, methyl ethyl ketone, acetone, chloroform, diethyl carbonate, benzyl alcohol, butanol, propanol, pentanol, methanol, ethanol, and isopropyl alcohol.

In one embodiment, the production method may further include irradiating the second preliminary porous film (B) discharged from the liquid treatment chamber with an electron beam.

In one embodiment, the electron beam irradiation may be performed on the second preliminary porous film (B) within 60 sec after the second preliminary porous film (B) is discharged from the liquid treatment chamber.

In one embodiment, while the second preliminary porous film (B) is wound in the electron beam irradiation unit, the second preliminary porous film (B) may be irradiated with an electron beam.

In one embodiment, the electron beam irradiation on the second preliminary porous film (B) may be performed in an inert gas atmosphere chamber.

In one embodiment, the production method may further include, prior to performing electron beam irradiation on the second preliminary porous film (B), reintroducing the second preliminary porous film (B) into the liquid treatment chamber at least once.

A method for producing a porous polymer film according to embodiments of the present disclosure includes: preparing an inert gas atmosphere chamber including a suction roller at a front end of the chamber and an electron beam irradiation unit at a rear end of the chamber; and introducing a first preliminary porous film (C) into the inert gas atmosphere chamber, wherein the first preliminary porous film (C) travels on the suction roller under a condition in which a suction index $I_S$, defined by Equation 3 below, satisfies 1 or more:

[Equation 3]

$$I_S = (S_1 \times S_2) / 100$$

In Equation 3, $S_1$ denotes the suction pressure (mmaq) of the suction roller, and $S_2$ denotes the time (sec) required for the first preliminary porous film (C) to travel on the suction roller.

In one embodiment, in Equation 3, $S_1$ may be 5,000 mmaq or less (49,033.25 Pa or less).

In one embodiment, in Equation 3, $S_2$ may be 0.1 sec to 20 sec.

In one embodiment, the production method may further include irradiating the first preliminary porous film (C) with an electron beam in the electron beam irradiation unit.

In one embodiment, the electron beam irradiation may be performed on the first preliminary porous film (C) within 60 sec after the first preliminary porous film (C) passes the suction roller.

In one embodiment, while the first preliminary porous film (C) is wound in the electron beam irradiation unit, the first preliminary porous film (C) may be irradiated with an electron beam.

In one embodiment, the inert gas atmosphere chamber may be filled with an inert gas, which is selected from one or more of $N_2$, He, Ar, Ne, Kr, and Xe.

In a further aspect, the present disclosure provides a system for producing a porous polymer film, the system comprising: at least one transport roller configured to move a preliminary porous film; a winder including a winder roller and configured to wind the preliminary porous film; and an electron beam irradiation device including an electron beam irradiation unit, wherein the system further comprises one or more of the following chambers (a), (b) and/or (c), respectively alone or in combination:

(a) a vacuum atmosphere chamber including the electron beam irradiation unit at a rear end of the chamber, the vacuum atmosphere chamber being provided at a condition in which a vacuum index $I_V$, defined by Equation 1 below, satisfies 0.1 to 3,000:

$$[\text{Equation 1}]$$

$$I_V = (V_2 / V_1) \times (1 / 100),$$

in Equation 1, $V_1$ denotes a vacuum level (torr) within the vacuum atmosphere chamber, and $V_2$ denotes a film travel time (sec) of a first preliminary porous film (A) after introduction into the vacuum atmosphere chamber and before irradiation with an electron beam by the electron beam irradiation unit;

(b) a liquid treatment chamber which is filled with a non-reactive liquid or adapted to spray a non-reactive liquid, the liquid treatment chamber being provided at a condition in which an impregnation index $I_L$, defined by Equation 2 below, satisfies 0.8 or more, and optionally 2.0 or less:

$$[\text{Equation 2}]$$

$$I_L = L_2 / L_1,$$

in Equation 2, $L_1$; denotes a surface tension (mN/m) of the non-reactive liquid, and $L_2$ denotes a surface energy (mN/m) of a first preliminary porous film (B); or

(c) an inert gas atmosphere chamber including a suction roller at a front end of the chamber and an electron beam irradiation unit at a rear end of the chamber, the suction roller being adapted such that a first preliminary porous film (C) travels on the suction roller under a condition in which a suction index $I_S$, defined by Equation 3 below, satisfies 1 or more:

$$[\text{Equation 3}]$$

$$I_S = (S_1 \times S_2) / 100,$$

in Equation 3, $S_1$ denotes a suction pressure (mmaq) of the suction roller, and $S_2$ denotes a time (sec) required for the first preliminary porous film (C) to travel on the suction roller.

In an embodiment, the system may provide the electron beam irradiation device being disposed at a distance of 100 cm or less from a central axis of the winder roller, and the electron beam irradiation unit being arranged toward the central axis of the winder roller.

In an embodiment, the system may further comprise a loading unit and a transport unit, wherein the loading unit is configured to unwind the preliminary porous film wound into a roll form and supply the preliminary porous film to the transport unit, optionally further comprising a supply unit, the supply unit being adapted to extrude and stretch a raw material containing a polymer to form the preliminary porous film, and preferably being further adapted to wind the preliminary porous film in the roll form, and supply it to the loading unit.

In an embodiment of the system, the preliminary porous film may include one or more of: polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-polychlorotrifluoroethylene (PVDF-CTFE), polyvinylidene fluoridepolyethylenetetrafluoroethylene (PVDF-ETFE), polyacrylonitrile (PAN), polyethylene terephthalate (PET), polybutylene terephthalate (PBT), polyethylene naphthalate (PEN), polyimide (PI), polyphenylene sulfide (PPS), polysulfone (PSF), polyethersulfone (PES), ethylene-vinyl acetate (EVA), and polycarbonate (PC).

In a further aspect, the present disclosure provides a use of the system according to any one of the above aspect and embodiments for controlling a degree of oxygen removal within pores of a preliminary porous film (10), optionally wherein side reactions caused by oxygen during electron beam crosslinking are suppressed or reduced.

According to the method for producing a porous polymer film according to embodiments of the present disclosure, side reactions that may occur due to oxygen during the crosslinking process can be prevented or reduced.

Therefore, the chemical and mechanical properties of the resulting porous polymer film may be improved. For example, the solvent resistance and heat resistance of the porous polymer film may be improved.

[BRIEF DESCRIPTION OF THE DRAWINGS]

The above and other objects, features and advantages of the present disclosure will be more clearly understood from the following detailed description taken in conjunction with the accompanying drawings, in which:

FIG. 1 is a schematic process flowchart illustrating a method for producing a porous polymer film according to one embodiment of the present disclosure;
FIG. 2 is a schematic process flowchart illustrating a method for producing a porous polymer film according to one embodiment of the present disclosure;
FIG. 3 is a schematic process flowchart illustrating a method for producing a porous polymer film according to one embodiment of the present disclosure;
FIG. 4 is a schematic process block diagram illustrating a method for producing a porous polymer film according to one embodiment of the present disclosure;
FIG. 5 is a schematic process block diagram illustrating a method for producing a porous polymer film according to one embodiment of the present disclosure;
FIG. 6 is a schematic process block diagram illustrating a method for producing a porous polymer film according to one embodiment of the present disclosure;
FIG. 7 is a schematic process block diagram illustrating a method for producing a porous polymer film according to one embodiment of the present disclosure;
FIG. 8 is a schematic view illustrating a system for producing a porous polymer film according to an exemplary embodiment;
FIG. 9 is a schematic view illustrating the direction for describing a process of measuring the cumulative irradiation dose in Example 9-1;
FIG. 10 is a schematic view illustrating the direction for describing a process of measuring the cumulative irradiation dose in Example 9-2; and
FIG. 11 is a schematic view illustrating the direction for describing a process of measuring the cumulative irradiation dose in Reference Examples 1-1 and 1-2.

[DETAILED DESCRIPTION OF THE INVENTION]

Hereinafter, exemplary embodiments of the present disclosure will be described in detail with reference to the accompanying drawing so that those skilled in the art may easily practice the present disclosure.

**<Method for preparing a porous polymer film>**

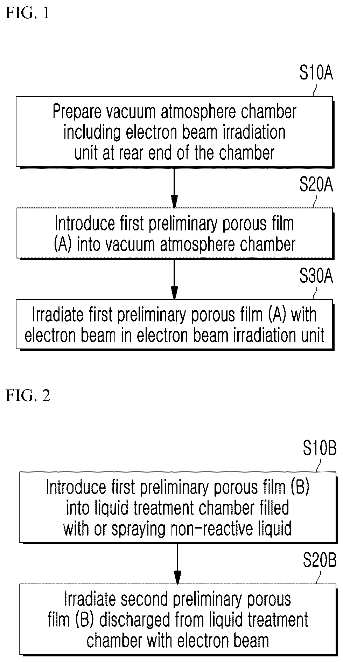

FIG. 1 is a schematic process flowchart illustrating a method for producing a porous polymer film according to one embodiment of the present disclosure.
The method for producing a porous polymer film according to one embodiment of the present disclosure includes: preparing a vacuum atmosphere chamber including an electron beam irradiation unit at a rear end of the chamber (step S10A); and introducing a first preliminary porous film (A) into the vacuum atmosphere chamber (step S20A), wherein the first preliminary porous film (A) passes through the vacuum atmosphere chamber under a condition in which a vacuum index $I_V$, defined by Equation 1 below, satisfies 0.1 to 3,000.

$$[\text{Equation 1}]$$

$$I_V = (V_2 / V_1) \times (1 / 100)$$

In Equation 1, $V_1$ denotes the vacuum level (torr) within the vacuum atmosphere chamber, and $V_2$ denotes the film travel time (sec) of the first preliminary porous film (A) from the time it is introduced into the vacuum atmosphere chamber until it is irradiated with an electron beam by the electron beam irradiation unit.
Therefore, by sufficiently removing oxygen present within the pores of the first preliminary porous film (A), side reactions caused by oxygen may be effectively prevented or suppressed during the subsequent crosslinking process.
For example, oxygen may capture and consume free radicals generated during the crosslinking process, thereby reducing the efficiency of the crosslinking reaction. In addition, free radicals may undergo an oxidative decomposition reaction with oxygen, generating peroxyl radicals and other byproducts that induce side reactions. This may result in the generation of oxidation byproducts. In this case, the mechanical strength and/or thermal stability of the produced polymer film may be reduced.

According to the method for producing a porous polymer film according to one embodiment of the present disclosure, the above-described phenomenon may be prevented or reduced, thereby improving both the chemical and mechanical properties of the porous polymer film.

As a non-limiting example, the vacuum atmosphere chamber may refer to a device that maintains an internal space in a low-oxygen or gas-free state by forming a pressure within the chamber lower than the external atmospheric pressure. For example, the vacuum atmosphere chamber may be connected to a vacuum pump, a valve, and/or other components such as one or more pipes.

In some embodiments, the $I_V$ may be 0.1 to 3,000, 0.5 to 2,500, 1 to 1,500, 1 to 1,000, 1 to 900, 1 to 700, 1 to 500, 1 to 300, or 2 to 300.

Accordingly, oxygen present within the pores of the first preliminary porous film (A) may be effectively removed.

In one embodiment, in Equation 1, $V_1$ may be $1.0 \times 10^{-6}$ torr to $7.6 \times 10^2$ torr, for example, $1.0 \times 10^{-3}$ torr to $1.0 \times 10^{-1}$ torr. Accordingly, deformation of the first preliminary porous film (A) may be prevented, and oxygen present within the pores thereof may be effectively removed.

In one embodiment, in Equation 1, $V_2$ may be 1 sec to 180 sec, and for example, 10 sec to 120 sec. Accordingly, the overall efficiency of the production method may be improved, and oxygen present within the pores of the first preliminary porous film (A) may be sufficiently removed.

In one embodiment, the production method may further include irradiating the first preliminary porous film (A) with an electron beam from the electron beam irradiation unit (step S30A).

By irradiating the first preliminary porous film (A), from which at least 80% of the oxygen within the pores has been removed, with an electron beam, a crosslinking reaction may be initiated, thereby preventing radical depletion caused by oxygen and suppressing or reducing the production of byproducts.

The first preliminary porous film (A) is not particularly limited as long as it can be cured by electron beam irradiation, and may include, for example, polyolefin resins such as polyethylene, polypropylene, and polymethylpentene; polyesters such as nylon and polyethylene terephthalate; polycarbonate, styrene-based resins; fluorine-based resins such as polytetrafluoroethylene and polyvinylidene fluoride; and vinyl chloride resins. These may be used alone or in combination of two or more thereof.

In one embodiment, the first preliminary porous film (A) may include polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-polychlorotrifluoroethylene (PVDF-CTFE), polyvinylidene fluoridepolyethylenetetrafluoroethylene (PVDF-ETFE), polyacrylonitrile (PAN), polyethylene terephthalate (PET), polybutylene terephthalate (PBT), polyethylene naphthalate (PEN), polyimide (PI), polyphenylene sulfide (PPS), polysulfone (PSF), polyethersulfone (PES), ethylene-vinyl acetate (EVA), and/or polycarbonate (PC).

The polyolefin-based resin may include a polypropylene-based resin, a polyethylenebased resin, or other polyolefin-based resins and mixtures thereof.

In one embodiment, the production method may further include extruding, or extruding and stretching a raw material containing a polymer to form the first preliminary porous film (A).

As a non-limiting example, the extrusion and stretching device may include a die such as a T-die, and a uniaxial or biaxial stretching device such as a tender device may be used.

As a non-limiting example, the raw material including the polymer may be provided in the form of pellets or melt.

As a non-limiting example, the pellet-form raw material may be extruded and cooled using an extruder at a temperature of 200°C or higher to form an unstretched resin sheet, and the unstretched sheet may then be stretched to form the first preliminary porous film (A). The stretching method may include simultaneous biaxial stretching, sequential biaxial stretching, multi-stage stretching, multiple stretching, etc.

In one embodiment, the first preliminary porous film (A) may have a thickness of 200 $\mu$m or less, for example, 5 $\mu$m to 50 $\mu$m, 5 $\mu$m to 30 $\mu$m, or 5 $\mu$m to 20 $\mu$m.

In one embodiment, the first preliminary porous film (A) may have a porosity of 10% to 80%, for example, 30% to 60%, or 35% to 55%.

The porosity of the first preliminary porous film (A) may be determined, for example, by calculating the space (pore volume ratio) within the film.

The porosity of the film may be measured, for example, using mass- and dimension-based methods, liquid infiltration methods, and/or other common techniques that are suitable for porosity measurement of porous materials such as mercury porosimetry.

As a non-limiting example, in the mass- and dimension-based method, the porosity may be calculated as follows: first, a film specimen is prepared; the mass of the specimen is measured using a precision balance; its thickness and area are measured; and the skeletal density of the polymer is measured using a device such as a helium pycnometer. The measured mass of the specimen is divided by the product of the thickness, area, and skeletal density to calculate the volume fraction occupied by the solids within the film, and this value is then subtracted from the total volume to obtain the porosity (%). For example, the thickness of the film may be measured using a contact-type thickness gauge, and the contact-type thickness gauge may have a precision of about 0.1 $\mu$m. As a non-limiting example, the thickness of the film may be measured using a TESA Mu-Hite Electronic Height Gauge manufactured by TESA, and the measurement pressure may be set to 0.63 N.

As a non-limiting example, in the liquid infiltration method, the porosity may be calculated as follows: a specimen is sufficiently immersed in a solvent to impregnate the interior of the pores with the solvent, and the mass of the impregnated specimen and the mass of the dried specimen are measured, respectively. The measured mass difference is multiplied by the density of the solvent to calculate the volume filled in the pores, and this value is then compared with the total volume of the film to calculate the porosity.

In one embodiment, the first preliminary porous film (A) may have a pore size of 100 nm or less, for example, 40 nm to 100 nm, 40 nm to 90 nm, 40 nm to 70 nm, or 40 nm to 60 nm.

The pore size may refer to an average diameter of the pores, and may, for example, be a median pore diameter ($D_{50}$). As a non-limiting example, the pore size may be measured using a pore size analyzer according to the ASTM F316-03 standard, for example, by the half-dry method. As the pore analysis device, for example, a capillary flow porometer, a gas adsorption analyzer (BET, BJH, etc.), or a gas displacement pycnometer (helium pycnometer) may be used.

In one embodiment, when the electron beam is irradiated from the electron beam irradiation unit, the oxygen substitution degree of the first preliminary porous film (A) may be 80% or more, 90% or more, or 95% or more.

As used herein, the term "oxygen substitution degree" refers to a ratio converted into a percentage, obtained by dividing the total oxygen content removed from the pores of the porous polymer film by the total oxygen content contained in the pores. The method for measuring the total oxygen content is not particularly limited. For example, when the oxygen substitution degree is calculated using the total molar amount of oxygen as the total oxygen content, the oxygen substitution degree may be expressed as the ratio, converted into a percentage, of the total molar amount of oxygen removed from the pores of the porous polymer film to the total molar amount of oxygen contained in the pores of the porous polymer film.

In one embodiment, the oxygen substitution degree may refer to a ratio converted into a percentage, obtained by dividing the total molar amount of oxygen removed from the pores of the first preliminary porous film (A) when irradiated with an electron beam by the electron beam irradiation unit, by the total molar amount of oxygen present within the pores of the first preliminary porous film (A) before being introduced into the vacuum atmosphere chamber.

The upper limit of the oxygen substitution degree is not particularly limited, and the higher the value, the more side reactions caused by oxygen may be prevented or reduced.

As a non-limiting example, before being introduced into the vacuum atmosphere chamber, the total molar amount of oxygen present within the pores (ni) of the first preliminary porous film (A) may be calculated as follows: For example, before the first preliminary porous film (A) is introduced into the vacuum atmosphere chamber, the interior of the pores of the film stored or prepared under an air atmosphere may be filled with air. The pore volume ($V_P$) may be calculated by multiplying the total volume ($V_F$) of the first preliminary porous film (A) by its porosity ($R_P$), and the calculated pore volume ($V_P$), the atmospheric absolute pressure of about 101.325 kPa, the room temperature of about 298.15 K, and the gas constant ($R$) may then be applied to the ideal gas equation of state (hereinafter referred to simply as the ideal gas equation) ($PV = nRT$) to calculate the total molar amount of gas in the pores ($n_T$). At this time, the temperature is not particularly limited, and the temperature measured under the atmosphere in which the film is stored or prepared may be applied to the ideal gas equation. The total molar amount of oxygen present within the pores ($n_I$) may be calculated by multiplying the total molar amount of gas in the pores ($n_T$) by the mole fraction of oxygen in the atmosphere ($n_O$), which is about 0.21. Here, the gas constant R is a known constant and may be about 8.314 J/(mol·K).

As a non-limiting example, the total molar amount of oxygen removed within the pores ($n_F$) of the first preliminary porous film (A) may be calculated as follows:

For example, an oxygen analyzer may be installed in the vacuum atmosphere chamber to measure the increase in the partial pressure of oxygen ($P_O$). The increase in the partial pressure of oxygen ($P_O$), the effective volume ($V_C$) of the chamber, the internal temperature ($T_C$) of the chamber, and the gas constant ($R$) may be applied to the ideal gas equation to calculate the total molar amount of oxygen removed from the pores ($n_F$).

The oxygen analyzer may be a device for measuring the increase in the partial pressure of oxygen ($P_O$), and if necessary, may also measure the partial pressure of oxygen. The oxygen analyzer may be, for example, a residual gas analyzer (RGA, mass spectrometer), a paramagnetic oxygen analyzer, a zirconia oxygen analyzer, a galvanic cell-type oxygen analyzer, or another electrochemical oxygen analyzer. Any device capable of measuring the partial pressure of oxygen (or the temporal increase in partial pressure) may be used, and the structure or material of the device is not particularly limited. In addition, the increase in the partial pressure of oxygen ($P_O$) may be calculated by measuring the oxygen concentration (vol%) and the total chamber pressure, multiplying them to obtain the oxygen partial pressure, and then calculating the difference from the initial partial pressure.

The porous polymer film to be produced may include a crosslinked resin of the first preliminary porous film (A), and may include, for example, a crosslinked polyolefin-based resin, a crosslinked polyester, a crosslinked polycarbonate, a crosslinked styrene-based resin, a crosslinked fluorine-based resin, or a crosslinked vinyl chloride resin.

In one embodiment, the electron beam irradiation may be performed under an acceleration voltage of 0.1 MeV to 10 MeV. For example, the electron beam may be irradiated under an acceleration voltage of 0.1 MeV to 5 MeV or 0.2 MeV to 2.5 MeV. Accordingly, crosslinking between polymer chains may be appropriately performed, and decomposition of the polymer chains may be suppressed.

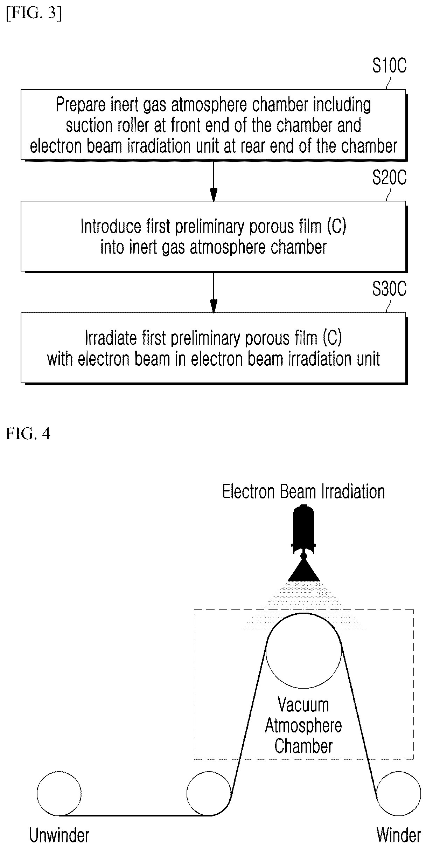

FIG. 4 is a schematic process block diagram illustrating, by way of example, a case in which the first preliminary porous film (A) passes through the vacuum atmosphere chamber in the method for producing a porous polymer film according to one embodiment of the present disclosure.

In one embodiment, the first preliminary porous film (A) may be conveyed using a roll-to-roll process.

For example, the vacuum atmosphere chamber may include a film transport unit at the front end, and the electron beam irradiation at the rear end thereof. For example, the film transport unit and the electron beam irradiation unit may be continuously connected through a roll-to-roll process, allowing the entire process to be performed continuously.

As a non-limiting example, the electron beam irradiation unit may include an electron beam irradiation device, and the type of the electron beam irradiation device is not particularly limited.

The electron beam irradiation device may be mounted inside or outside the vacuum atmosphere chamber. For example, when the electron beam irradiation device is mounted outside the vacuum atmosphere chamber, the electron beam may be irradiated onto the first preliminary porous film (A) traveling inside the vacuum atmosphere chamber through a window through which the electron beam is transmitted.

The window through which the electron beam is transmitted may be provided on one surface of the vacuum atmosphere chamber, for example, on the top, bottom, or side of the vacuum atmosphere chamber, or for example, on the top or side of the vacuum atmosphere chamber.

As a non-limiting example, the window through which the electron beam is transmitted may be formed of a material including titanium, beryllium, a silicon nitride membrane, polyimide, or boron nitride, but is not limited thereto.

In one embodiment, the first preliminary porous film (A) may be provided in a state of being wound into a roll form and conveyed to the vacuum atmosphere chamber by unwinding.

In one embodiment, the conveyed first preliminary porous film (A) may be re-wound into a roll form by winding.

The unwinding may be performed by an unwinder roller, and the winding may be performed by a winder roller. For example, the first preliminary porous film (A) wound on the unwinder roller may be unwound and conveyed by at least one transport roller, during which it may be crosslinked by the electron beam irradiation unit. The crosslinked first preliminary porous film (A) may then be conveyed to the winder roller and wound.

The number of transport rollers may be adjusted based on the scale of the equipment and/or device, the size and type of the first preliminary porous film (A), and other factors such as the weight of the first preliminary porous film (A), and may be, for example, 1 to 20, but is not limited thereto.

**In** one embodiment, the unwinding and winding speeds may be 10 meters per minute (mpm) to 200 mpm.

**In** one embodiment, the winder roller may be disposed outside or inside the vacuum atmosphere chamber.

In one embodiment, the winder roller may be disposed outside the vacuum atmosphere chamber, and the first preliminary porous film (A) traveling within the vacuum atmosphere chamber may be irradiated with an electron beam by the electron beam irradiation unit.

As a non-limiting example, the unwinder roller and the winder roller may further include a driving unit, such as a motor, for driving each roller, and a frame unit for supporting each component.

The direction of the electron beam irradiation may be, for example, substantially perpendicular to one surface of the first preliminary porous film (A). In this case, the electron beam irradiation device may be controlled in consideration of the energy density and acceleration voltage of the electron beam, the diameter of the winder roller, the thickness of the preliminary porous film, and the energy required for crosslinking.

The porous polymer film, which is crosslinked by the electron beam irradiation and produced within the vacuum atmosphere chamber, may be discharged from the vacuum atmosphere chamber, conveyed to the winder roller, and wound. The porous polymer film discharged from the vacuum atmosphere chamber may be conveyed to the winder roller and wound under an air atmosphere or an additional vacuum atmosphere. As a non-limiting example, the additional vacuum atmosphere may be an additional vacuum atmosphere chamber, but is not limited thereto.

In one embodiment, while the first preliminary porous film (A) is wound in the electron beam irradiation unit, the first preliminary porous film (A) may be irradiated with an electron beam.

In one embodiment, the winder roller may be disposed inside the vacuum atmosphere chamber, and the first preliminary porous film (A) wound by the winder roller within the vacuum atmosphere chamber may be irradiated with an electron beam by the electron beam irradiation unit.

The irradiation direction of the electron beam may be, for example, toward a central axis of the winder roller, and the porous polymer film may be repeatedly exposed to the electron beam by the rotating winder roller. Accordingly, even when irradiated with a low-energy electron beam, the first preliminary porous film (A) may be sufficiently crosslinked.

As a non-limiting example, the separation distance between the electron beam irradiation device and the central axis of the winder roller may be 10 cm to 100 cm or 30 cm to 100 cm. The separation distance may refer to the shortest straight-line distance connecting the electron beam irradiation unit of the electron beam irradiation device and the surface of the winder roller.

At this time, the separation distance of the electron beam irradiation device may be controlled in consideration of the energy density and acceleration voltage of the electron beam, the diameter of the winder roller, the thickness of the preliminary porous film, and the energy required for crosslinking.

In one embodiment, the penetration depth of the electron beam may be 0.2 mm to 7 mm.

As a non-limiting example, when the electron beam is irradiated onto the first preliminary porous film (A) wound by the winder roller, any region of the first preliminary porous film (A) may be irradiated with the electron beam 100 to 300 times.

In one embodiment, the cumulative irradiation dose of the electron beam for the porous polymer film may be 10 kGy to 300 kGy. For example, the cumulative irradiation dose of the electron beam may be the average cumulative irradiation dose per unit area of the porous polymer film. For example, the cumulative irradiation dose may be calculated based on a single irradiation dose of the electron beam, the region ($A_{rad}$) of the first preliminary porous film (A) irradiated with the electron beam, the irradiation depth of the electron beam, and the number of passes.

For example, the unwinder roller and the winder roller may rotate together. For example, in an initial stage of supplying the first preliminary porous film (A), only the unwinder roller may rotate while conveying the first preliminary porous film (A) toward the winder roller by the transport roller. As the first preliminary porous film (A) begins to be wound around the winder roller, the unwinder roller and the winder roller may rotate at the same speed. For example, in a later stage, when the first preliminary porous film (A) wound around the unwinder roller is completely supplied, only the winder roller may rotate. For example, after the first preliminary porous film (A) is completely wound around the winder roller, the winder roller may continue to rotate while irradiating it with an electron beam, and the additional rotation amount of the winder roller may be determined based on the sufficient curing of the first preliminary porous film (A) that was most recently wound or the accumulated irradiation dose of the electron beam.

For example, when the winder roller is disposed outside the vacuum atmosphere chamber, a single irradiation dose of the electron beam to the first preliminary porous film (A) traveling within the vacuum atmosphere chamber may be substantially equal to the cumulative irradiation dose.

For example, the porous polymer film may be produced in a roll form that is wound by the winder roller. As a non-limiting example, the porous polymer film in the roll form may have a diameter of 10 cm to 30 cm. The diameter may refer to the diameter of the vertical cross-section of the porous polymer film obtained upon completion of production. The diameter of the rollshaped porous polymer film may be adjusted in consideration of the production scale, the thickness of the first preliminary porous film (A), the energy required for curing, and the system installation space, and is not limited to the above-described range.

A method for producing a porous polymer film according to another embodiment of the present disclosure includes: introducing a first preliminary porous film (B) into a liquid treatment chamber filled with a non-reactive liquid or spraying a non-reactive liquid (step S10B), wherein the first preliminary porous film (B) passes through the liquid treatment chamber under a condition in which an impregnation index $I_L$, defined by Equation 2 below, satisfies 0.8 or more.

$$[\text{Equation } 2]$$

$$I_L = L_2 / L_1$$

In Equation 2, $L_1$; denotes the surface tension (mN/m) of the non-reactive liquid, and $L_2$ denotes the surface energy (mN/m) of the first preliminary porous film (B), and

subsequently obtaining a second preliminary porous film (B), which may be discharged from the liquid treatment chamber.

Accordingly, oxygen present within the pores of the first preliminary porous film (B) may be sufficiently removed, thereby effectively preventing or suppressing side reactions caused by oxygen in the subsequent crosslinking process.

The surface tension may be measured, for example, at 25 ± 2 °C using a tensiometer by the ring method (Du Noüy method) in accordance with ISO 304, ASTM D1331, or an equivalent standard. The surface energy may be calculated, for example, by measuring the contact angles of two or more probe liquids at 25 ± 2 °C and applying the Owens-Wendt-Rabel-Kaelble method in accordance with ISO 19403 or an equivalent standard.

In some embodiments, $I_L$ may be 0.8 to 2.0, 0.8 to 1.8, 0.8 to 1.5, 0.8 to 1.4, or 0.8 to 1.2. Accordingly, oxygen present within the pores of the first preliminary porous film (B) may be further effectively removed.

When the liquid treatment chamber is filled with the non-reactive liquid, the liquid treatment chamber may serve as a liquid-filled chamber. In this case, the first preliminary porous film (B) may be conveyed while being immersed in the non-reactive liquid after being introduced into the liquid filling chamber.

If a spraying device is installed in the liquid treatment chamber, the liquid treatment chamber may serve as a liquid-spraying chamber. The spraying device may include a spray nozzle, and/or other components that are adapted to eject one or more fluids. In this case, the introduced first preliminary porous film (B) may be conveyed through the liquid-spraying chamber while being sprayed with the non-reactive liquid.

In one embodiment, in Equation 2, $L_1$ may be 80 mN/m or less, for example, 15 mN/m to 80 mN/m, 15 mN/m to 70 mN/m, 15 mN/m to 60 mN/m, or 20 mN/m to 40 mN/m. Accordingly, the penetration of the non-reactive liquid into the pores of the first preliminary porous film (B) may be enhanced.

In one embodiment, in Equation 2, $L_2$ may be 80 mN/m or less, for example, 15 mN/m to 80 mN/m, 15 mN/m to 70 mN/m, 15 mN/m to 60 mN/m, or 20 mN/m to 40 mN/m. Accordingly, the penetration of the non-reactive liquid into the pores of the first preliminary porous film (B) may be enhanced.

In one embodiment, in Equation 2, an absolute value of a difference between $L_1$ and $L_2$ ( $| L_2 - L_1 |$ ) may be 20 mN/m or less. $| L_2 - L_1 |$ may be, for example, 15 mN/m or less, 12 mN/m or less, 10 mN/m or less, or 0 to 10 mN/m. Accordingly, the penetration of the non-reactive liquid into the pores of the first preliminary porous film (B) may be further effectively enhanced.

In one embodiment, the non-reactive liquid may include at least one organic solvent selected from the group consisting of organic solvents having a boiling point of 40°C or higher. Accordingly, volatilization of the non-reactive liquid permeated into the pores of the film may be prevented or reduced during a subsequent crosslinking process.

In one embodiment, the non-reactive liquid may include at least one organic solvent selected from the group consisting of organic solvents having a boiling point of 40°C to 300°C.

Non-limiting examples of the non-reactive liquid may include propylene glycol, n-hexane, n-heptane, n-octane, n-nonane, cyclohexane, methylcyclohexane, toluene, xylene, ethylbenzene, ethyl acetate, butyl acetate, isobutyl acetate, sec-butyl acetate, diisopropyl ether, dimethyl carbonate, isopropyl acetate, methyl isobutyl ketone, methyl ethyl ketone, acetone, chloroform, diethyl carbonate, benzyl alcohol, butanol, propanol, pentanol, methanol, ethanol, and/or isopropyl alcohol.

FIG. 2 is a schematic process flowchart illustrating a method for producing a porous polymer film according to another embodiment of the present disclosure.

In one embodiment, the production method may further include irradiating the second preliminary porous film (B) discharged from the liquid treatment chamber with an electron beam (step S20B).

By irradiating the second preliminary porous film (B), in which at least 80% of the oxygen within the pores is replaced by the non-reactive liquid, with an electron beam to perform a crosslinking reaction, radical depletion caused by oxygen may be prevented, and the generation of byproducts may be suppressed or reduced.

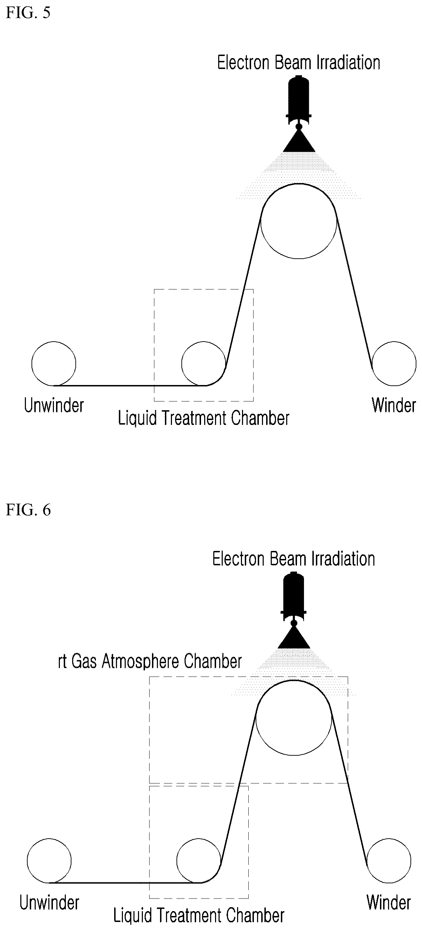

FIG. 5 is a schematic process block diagram illustrating a case in which the first preliminary porous film (B) passes through the liquid treatment chamber in the method for producing a porous polymer film according to one embodiment of the present disclosure.

In one embodiment, the electron beam irradiation may be performed on the second preliminary porous film (B) within 60 sec after the second preliminary porous film (B) is discharged from the liquid treatment chamber. Accordingly, the crosslinking reaction may proceed in a state where the non-reactive liquid within the pores of the second preliminary porous film (B) is substantially not replaced with oxygen or is only slightly replaced, thereby improving both the chemical resistance and the heat resistance of the resulting porous polymer film.

In one embodiment, the electron beam irradiation may be performed on the second preliminary porous film (B) within 50 sec, 40 sec, or 30 sec after the second preliminary porous film (B) is discharged from the liquid treatment chamber.

In one embodiment, the electron beam irradiation to the second preliminary porous film (B) may be performed in an inert gas atmosphere chamber. For example, the inert gas atmosphere chamber may include an electron beam irradiation unit. Reference may be made to the foregoing description with respect to the electron beam irradiation unit.

FIG. 6 is a schematic process block diagram illustrating, by way of example, a case in which the first preliminary porous film (B) passes through the liquid treatment chamber and the inert gas atmosphere chamber in the method for producing a porous polymer film according to one embodiment of the present disclosure. In FIG. 6, the inert gas atmosphere chamber is simply referred to as an "inert atmosphere chamber."

The electron beam irradiation device may be mounted inside or outside the inert gas atmosphere chamber. For example, when the electron beam irradiation device is mounted outside the inert gas atmosphere chamber, the electron beam may be irradiated onto the second preliminary porous film (B) traveling within the inert gas atmosphere chamber through a window through which the electron beam is transmitted.

For example, a film transport unit may be provided at the front end (inlet side) of the inert gas atmosphere chamber, and the electron beam irradiation unit may be provided at the rear end of the chamber. For example, the travel time of the second preliminary porous film (B), from the time it is discharged from the liquid treatment chamber until it is irradiated with an electron beam by the electron beam irradiation unit within the inert gas atmosphere chamber, may be within 60 sec.

As a non-limiting example, the inert gas atmosphere chamber may refer to a device filled with an inert gas to maintain the internal space in an inert gas state, and may be connected to, for example, a gas inlet, an outlet, a gas flow control valve, and/or one or more pipes.

For example, the inert gas may include $N_2$, He, Ar, Ne, Kr, and/or Xe.

In one embodiment, the liquid treatment chamber and the inert gas atmosphere chamber may be arranged in series.

As a non-limiting example, the liquid treatment chamber and the inert gas atmosphere chamber may be connected by a connecting member, such as piping or a pipe, or the outlet of the liquid treatment chamber and the inlet of the inert gas atmosphere chamber may be directly connected. For example, the first preliminary porous film (B) may be continuously introduced into the inert gas atmosphere chamber after passing through the liquid treatment chamber.

In one embodiment, the method may further include, prior to performing electron beam irradiation on the second preliminary porous film (B), reintroducing the second preliminary porous film (B) into the liquid treatment chamber at least once. Accordingly, the amount of oxygen removed from the pores of the second preliminary porous film (B) may be easily controlled.

In one embodiment, the winder roller may be disposed outside or inside the inert gas atmosphere chamber.

In one embodiment, the winder roller may be disposed outside the inert gas atmosphere chamber, and the first preliminary porous film (B) traveling within the inert gas atmosphere chamber may be irradiated with an electron beam by the electron beam irradiation unit.

The direction of the electron beam irradiation may be, for example, substantially perpendicular to one surface of the second preliminary porous film (B). The electron beam irradiation device may be controlled in consideration of the energy density and acceleration voltage of the electron beam, the diameter of the winder roller, the thickness of the preliminary porous film, and the energy required for crosslinking.

The porous polymer film, which is crosslinked by the electron beam irradiation and produced within the inert gas atmosphere chamber, may be discharged from the inert gas atmosphere chamber, conveyed to the winder roller, and wound. The porous polymer film discharged from the inert gas atmosphere chamber may be conveyed to the winder roller and wound under an air atmosphere or an additional vacuum atmosphere. As a non-limiting example, the additional vacuum atmosphere may be an additional vacuum atmosphere chamber.

In one embodiment, while the second preliminary porous film (B) is wound in the electron beam irradiation unit, the second preliminary porous film (B) may be irradiated with an electron beam.

In one embodiment, the winder roller may be disposed inside the inert gas atmosphere chamber, and the second preliminary porous film (B) wound by the winder roller within the inert gas atmosphere chamber may be irradiated with an electron beam by the electron beam irradiation unit.

Reference may be made to the foregoing description with respect to the electron beam irradiation unit.

Reference may be made to the foregoing description of the first preliminary porous film (A) with respect to the first preliminary porous film (B) and the second preliminary porous film (B). For example, the first preliminary porous film (B) and the second preliminary porous film (B) may be identical in type, differing only in whether at least a portion of the oxygen within the pores is replaced by the non-reactive liquid or the non-reactive liquid and/or the inert gas. For example, the film introduced into the liquid treatment chamber may be referred to as the first preliminary porous film (B), and the first preliminary porous film (B) may mean a film in which the oxygen within the pores has not been replaced with the non-reactive liquid. For example, the film discharged from the liquid treatment chamber may be referred to as the second preliminary porous film (B), and may mean a film in which at least a portion of the oxygen within the pores has been replaced with the non-reactive liquid. In addition, for example, when the first preliminary porous film (B) passes through both the liquid treatment chamber and the inert gas atmosphere chamber, the film discharged from the inert gas atmosphere chamber may be referred to as the second preliminary porous film (B), and may mean a film in which at least a portion of the oxygen within the pores has been replaced with the non-reactive liquid and/or the inert gas.

In one embodiment, the oxygen substitution degree of the second preliminary porous film (B) may be 80% or more, 90% or more, or 95% or more after it is discharged from the liquid treatment chamber.

The oxygen substitution degree may refer to a ratio converted into a percentage, obtained by dividing the total molar amount of oxygen removed from the film within the liquid treatment chamber by the total molar amount of oxygen present within the pores of the first preliminary porous film (B) before being introduced into the liquid treatment chamber.

The upper limit of the oxygen substitution degree is not particularly limited, and the higher the value, the more side reactions caused by oxygen may be prevented or reduced.

As a non-limiting example, before the first preliminary porous film (B) is introduced into the liquid treatment chamber, the total molar amount of oxygen present within the pores may be calculated with reference to the foregoing description of the total molar amount of oxygen present within the pores ($n_I$). For example, the pore volume ($V_P$) may be calculated by multiplying the total volume ($V_F$) of the first preliminary porous film (B) by its porosity ($R_P$), and the calculated pore volume ($V_P$) may then be applied to the ideal gas equation to obtain the value.

As a non-limiting example, the total molar amount of oxygen removed from the first preliminary porous film (B) in the liquid treatment chamber may be calculated with reference to the foregoing description of the total molar amount of oxygen removed from the pores ($n_F$). For example, an oxygen analyzer may be installed in the liquid treatment chamber to measure the increase in the partial pressure of oxygen ($P_O$), and the increase in the partial pressure of oxygen ($P_O$) may then be applied to the ideal gas equation to obtain the value.

Reference may be made to the foregoing description with respect to the oxygen analyzer.

In one embodiment, the first preliminary porous film (B) and the second preliminary porous film (B) may be conveyed by a roll-to-roll process. FIG. 5 is a schematic process block diagram illustrating the method for producing a porous polymer film according to another embodiment of the present disclosure.

Reference may be made to the foregoing description with respect to the roll-to-roll process.

The method for producing a porous polymer film according to another embodiment of the present disclosure includes: preparing an inert gas atmosphere chamber including a suction roller at a front end of the chamber and an electron beam irradiation unit at a rear end of the chamber (step S10C); and introducing a first preliminary porous film (C) into the inert gas atmosphere chamber (step S20C), wherein the first preliminary porous film (C) travels on the suction roller under a condition in which a suction index $I_S$, defined by Equation 3 below, satisfies 1 or more.

[Equation 3]

$$I_S = (S_1 \times S_2) / 100$$

In Equation 3, $S_1$ denotes the suction pressure (mmaq) of the suction roller, and $S_2$ denotes the time (sec) required for the first preliminary porous film (C) to travel on the suction roller. The first preliminary porous film (C) may travel along the suction roller disposed at the front end of the inert gas atmosphere chamber, and $S_2$ may denote the time (sec) required for the first preliminary porous film (C) to travel along the suction roller, which may be substantially equal to the time (sec) during which the suction pressure is applied to the first preliminary porous film (C).

Therefore, by sufficiently removing oxygen present within the pores of the first preliminary porous film (C), side reactions caused by oxygen may be effectively prevented or suppressed during a subsequent crosslinking process.

In some embodiments, $I_S$ may be 1 to 1,000, 1 to 900, 1 to 700, 1 to 500, 1 to 300, 1 to 250, 1 to 200, 1 to 150, or 1 to 100. Accordingly, oxygen present within the pores of the first preliminary porous film (C) may be further effectively removed.

In one embodiment, in Equation 3, $S_1$ may be 5,000 mmaq or less (49,033.25 Pa or less), for example, 100 mmaq to 5,000 mmaq (980.65 Pa to 49,033.25 Pa), 300 mmaq to 5,000 mmaq (2941.99 Pa to 49,033.25 Pa), 500 mmaq to 5,000 mmaq (4903.32 Pa to 49,033.25 Pa), or 1,000 mmaq to 5,000 mmaq (9806.65 Pa to 49,033.25 Pa). Accordingly, deformation of the first preliminary porous film (C) may be prevented, and oxygen present within the pores thereof may be effectively removed. The suction pressure may be defined as the pressure exerted by a column of water of 1 mm in height at 4 °C at the standard acceleration of gravity. In this context, 1 mmaq may be also referred to as 1 mm $H_2O$ which corresponds to 9.80665 Pa or approx. $7.36 \times 10^{-2}$ torr.

In one embodiment, in Equation 3, $S_2$ may be 0.1 sec to 20 sec, 0.1 sec to 15 sec, 0.1 sec to 5 sec, or 0.1 sec to 2 sec. Accordingly, the overall efficiency of the production method may be improved, and oxygen present within the pores of the first preliminary porous film (C) may be sufficiently removed.

FIG. 3 is a schematic process flowchart illustrating a method for producing a porous polymer film according to another embodiment of the present disclosure.

In one embodiment, the production method may further include irradiating the first preliminary porous film (C) with an electron beam in the electron beam irradiation unit (step S30C).

By irradiating the first preliminary porous film (C), in which at least 80% of the oxygen within the pores is replaced by the inert gas, with an electron beam to perform a crosslinking reaction, radical depletion caused by oxygen may be prevented, and the generation of byproducts may be suppressed or reduced.

Reference may be made to the foregoing description with respect to the inert gas.

Reference may be made to the foregoing description of the first preliminary porous film (A) with respect to the first preliminary porous film (C).

In one embodiment, the oxygen substitution degree of the first preliminary porous film (C) may be 80% or more, 90% or more, or 95% or more after it is discharged from the inert gas atmosphere chamber.

The oxygen substitution degree may refer to a ratio converted into a percentage, obtained by dividing the total molar amount of oxygen removed from the first preliminary porous film (C) when it passes through the suction roller, by the total molar amount of oxygen present within the pores before the first preliminary porous film (C) is introduced into the inert gas atmosphere chamber.

The total molar amount of oxygen removed from the first preliminary porous film (C) when it passes through the suction roller may be substantially equal to the total molar amount of oxygen removed from the pores of the first preliminary porous film (C) when irradiated with an electron beam by the electron beam irradiation unit.

In addition, the total molar amount of oxygen removed from the first preliminary porous film (C) in the inert gas atmosphere chamber may be substantially equal to the total molar amount of oxygen removed from the film when it passes through the suction roller.

The upper limit of the oxygen substitution degree is not particularly limited, and the higher the value, the more side reactions caused by oxygen may be prevented or reduced.

As a non-limiting example, before the first preliminary porous film (C) is introduced into the inert gas atmosphere chamber, the total molar amount of oxygen present within the pores may be calculated with reference to foregoing description of the total molar amount of oxygen present within the pores ($n_I$). For example, the pore volume ($V_P$) may be calculated by multiplying the total volume ($V_F$) of the first preliminary porous film (C) by its porosity ($R_P$), and the calculated pore volume ($V_P$) may then be applied to the ideal gas equation to obtain the value.

As a non-limiting example, the total molar amount of oxygen removed from the first preliminary porous film (C) may be calculated with reference to the foregoing description of the total molar amount of oxygen removed from the pores ($n_F$). For example, an oxygen analyzer may be installed in the inert gas atmosphere chamber to measure the increase in the partial pressure of oxygen ($P_O$), and the increase in the partial pressure of oxygen ($P_O$) may then be applied to the ideal gas equation to obtain the value.

Reference may be made to the foregoing description with respect to the oxygen analyzer.

In one embodiment, the first preliminary porous film (C) may be conveyed by a roll-to-roll process.

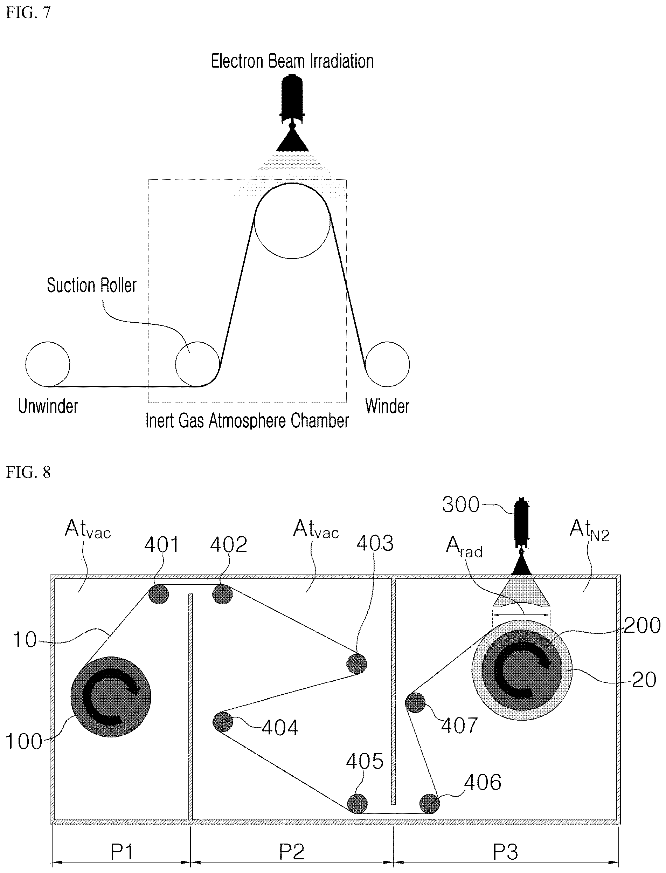

FIG. 7 is a schematic process block diagram illustrating, by way of example, a case in which the first preliminary porous film (C) passes through the inert gas atmosphere chamber in the method for producing a porous polymer film according to one embodiment of the present disclosure.

For example, the inert gas atmosphere chamber may include a suction transport unit including a suction roller at the front end, and an electron beam irradiation unit at the rear end thereof. For example, the suction transport unit and the electron beam irradiation unit may be continuously connected through a roll-to-roll process, allowing the entire process to be performed continuously. Reference may be made to the foregoing description with respect to the roll-to-roll process and the electron beam irradiation unit.

In one embodiment, the electron beam irradiation may be performed on the first preliminary porous film (C) within 60 sec after the first preliminary porous film (C) passes through the suction roller. Accordingly, the crosslinking reaction may proceed in a region of the pores of the first preliminary porous film (C) where oxygen has been removed, or in a state where the inert gas introduced into the pores is substantially not replaced with oxygen or is only slightly replaced, thereby improving both the chemical resistance and the heat resistance of the resulting porous polymer film.

In one embodiment, the electron beam irradiation may be performed on the first preliminary porous film (C) within 50 sec, 40 sec, or 30 sec after the first preliminary porous film (C) passes through the suction roller.

As a non-limiting example, the electron beam irradiation unit may include an electron beam irradiation device, and the type of the electron beam irradiation device is not particularly limited.

The electron beam irradiation device may be mounted inside or outside the inert gas atmosphere chamber. For example, when the electron beam irradiation device is mounted outside the inert gas atmosphere chamber, the electron beam may be irradiated onto the first preliminary porous film (C) traveling inside the inert gas atmosphere chamber through a window through which the electron beam is transmitted.

In one embodiment, the first preliminary porous film (C) may be provided in a state of being wound into a roll form and conveyed to the inert gas atmosphere chamber by unwinding.

In one embodiment, the conveyed first preliminary porous film (C) may be re-wound into a roll form by winding.

In one embodiment, the winder roller may be disposed outside or inside the inert gas atmosphere chamber.

In one embodiment, the winder roller is disposed outside the inert gas atmosphere chamber, and the first preliminary porous film (C) traveling within the inert gas atmosphere chamber may be irradiated with an electron beam by the electron beam irradiation unit.

The irradiation direction of the electron beam may be, for example, substantially perpendicular to one surface of the first preliminary porous film (C). The electron beam irradiation device may be controlled in consideration of the energy density and acceleration voltage of the electron beam, the diameter of the winder roller, the thickness of the preliminary porous film, and the energy required for crosslinking.

The porous polymer film, which is crosslinked by the electron beam irradiation within the inert gas atmosphere chamber, may be discharged from the inert gas atmosphere chamber, conveyed to the winder roller, and wound. The porous polymer film discharged from the inert gas atmosphere chamber may be conveyed to the winder roller and wound under an air atmosphere or an additional inert gas atmosphere. As a non-limiting example, the additional inert gas atmosphere may be an additional inert gas atmosphere chamber.

In one embodiment, while the first preliminary porous film (C) is wound in the electron beam irradiation unit, the first preliminary porous film (C) may be irradiated with an electron beam.

In one embodiment, the winder roller may be disposed inside the inert gas atmosphere chamber, and the first preliminary porous film (C) wound by the winder roller within the inert gas atmosphere chamber may be irradiated with an electron beam by the electron beam irradiation unit. Reference may be made to the foregoing description with respect to the electron beam irradiation.

The steps S10A, S20A, S30A, S10B, S20B, S10C, and/or S20C may be performed at room temperature.

In one embodiment, the method for producing the porous polymer film may be provided as a method for producing a porous polymer film for a secondary battery.

A porous polymer film produced by the production method according to embodiments of the present disclosure may have a crosslinking reactivity greater than 1.5, as defined by Equation 4 below.

[Equation 4]

$$\text{Crosslinking reactivity} = (A \times B / 10{,}000) - C$$

In Equation 4, A denotes the melt fracture temperature (°C), that is the temperature at which the porous polymer film fractures when stretched under a force of 0.015 N while being heated to 220°C at a heating rate of 5°C/min by thermomechanical analysis (TMA); B denotes the gel content, which is the percentage obtained by dividing the mass of the undissolved residual solid after immersing the porous polymer film in xylene at 135°C for 3 hours by the initial mass; and C denotes the high load melt index (HLMI) measured at 190°C under a load of 21.6 kg according to ASTM D1238 for the porous polymer film.

In one embodiment, the crosslinking reactivity may be 3 or less.

The porous polymer film may have improved solvent resistance. Accordingly, damage to the porous polymer film may be suppressed or reduced even when it comes into contact with an organic solvent.

The porous polymer film may also have improved heat resistance. Accordingly, damage caused by an external force may be suppressed even at high temperatures, and long-term operational stability and reliability may be achieved even when repeatedly exposed to high temperatures.

The thermomechanical analysis may be performed, for example, using a thermomechanical analyzer. The temperature of the porous polymer film may be increased by securing both ends of the film within the thermomechanical analyzer and then tensioning it. For example, with both ends of the porous polymer film being secured, the temperature may be increased from 25°C to 220°C at a rate of 5°C/min while applying a force of 0.015 N. During the heating process with the tensile force being applied, the temperature at which the porous polymer film fractures may be designated as the melt fracture temperature.

For example, the TMA450 model from TA Instruments may be used as the thermomechanical analyzer, but is not limited thereto.

For example, as the high-temperature durability of the porous polymer film improves, the melt fracture temperature may increase.

In one embodiment, in Equation 4, A may be 175°C or higher.

In one embodiment, in Equation 4, A may be 175 °C to 250 °C, or 160 °C to 200 °C.

For example, in Equation 4, B may be the percentage obtained by dividing the mass of the undissolved residual solid after immersing a sample of the porous polymer film, for example, 3 g, in xylene at 135°C for 3 hours, by the initial mass before immersion.

For example, B may be calculated through the steps of: heating 200 ml of xylene to 135°C; placing 3 g of the porous polymer film into the xylene; filtering and drying the solid after 3 hours from the time of addition, and measuring its weight; and converting the ratio of the mass of the residual solid to the initial input mass of 3 g into a percentage.

For example, as the organic solvent resistance of the porous polymer film improves, the gel content may be higher.

In one embodiment, in Equation 4, B may be 90% or more.

In one embodiment, in Equation 4, B may be 90% or more, or 95% or more. For example, B may be 95% to 100%.

Within the above range, the organic solvent resistance of the porous polymer film may be further improved.

According to an embodiment, the solubility of the porous polymer film in xylene may refer to the ratio of the dissolved portion to the total input amount, which may be defined as the value obtained by subtracting the gel content from 100, and may be calculated by the equation: Solubility = 100 - B (%). For example, the solubility of the porous polymer film in xylene may be less than 20%, less than 15%, less than 10%, or less than 5%.

For example, in Equation 4, C denotes the high load melt index (HLMI). For example, C may refer to the high load melt index (HLMI), which is measured as the mass (g/10 min) of the molten polymer extruded under a load of 21.6 kg at 190°C for 10 minutes after preparing a specimen by cutting the porous polymer film to a predetermined size.

In addition, for example, C may refer to the high load melt index (HLMI), measured in units of g/10 min, obtained by placing 3 g of the porous polymer film in a chamber having a hole at 190°C, applying a load of 21.6 kg, and measuring the mass extruded for 10 minutes. For example, the diameter and length of the hole may be formed to be $2.095 \pm 0.005$ mm

and 8.000 ± 0.025 mm, respectively, in accordance with a standard die (orifice).

Also, for example, C may be measured according to ASTM D1238.

For example, as the processability of the porous polymer film improves, the HLMI may be higher.

In one embodiment, in Equation 4, C may be 0.05 g/10 min or less. According to some embodiments, in Equation 4, C may be 0.03 g/10 min or less, or 0.02 g/10 min or less.

Within the above range, the processability of the porous polymer film may be further improved.

If the crosslinking reactivity of the porous polymer film is too low, the processability, solvent resistance, and/or high-temperature durability of the porous polymer film may be reduced.

In one embodiment, the porous polymer film may have a crosslinking reactivity of greater than 1.5 to 3, or 2 to 3.

In one embodiment, the porous polymer film may have a puncture strength of $0.15 \, N/\mu m$ or more. Accordingly, the porous polymer film may have improved mechanical properties.

The porous polymer film according to embodiments of the present disclosure may be applied to various electrochemical devices, including a separator for a secondary battery, and may be provided, for example, as a film for a separator.

The separator for a secondary battery according to embodiments of the present disclosure may include the above-described porous polymer film.

The separator for a secondary battery may further include a coating including, for example, a gas adsorbent.

The gas adsorbent may include, for example, a zeolite, and may further include one or more porous inorganic particles selected from the group consisting of, for example, aluminum hydroxide ($Al(OH)_3$), magnesium hydroxide ($Mg(OH)_2$), aluminum oxide ($Al_2O_3$), magnesium oxide (MgO), calcium oxide (CaO), barium sulfate ($BaSO_4$), boehmite, titanium dioxide ($TiO_2$), silica ($SiO_2$), and clay. As a non-limiting example, the gas adsorbent may have an average size (particle size, D50) of 0.01 to 5 $\mu m$.

The coating may further include at least one binder selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, and polyvinylalcohol.

In some embodiments, the separator for a secondary battery may have a thickness of 10 to 250 $\mu m$.

A gas separation membrane according to embodiments of the present disclosure may include the above-described porous polymer film.

The gas separation membrane may further include, for example, a selective layer. The selective layer may include graphene oxide, a metal-organic framework (MOF), hydrotalcite, zirconate, or calcium oxide, but is not limited thereto. The gas separation membrane may further include an intermediate layer including a siloxane-based polymer and/or a polyacetylene-based polymer between the porous polymer film and the selective layer, and the intermediate layer may function as an adhesive layer. The above-described gas separation membrane may selectively separate gases such as carbon dioxide, hydrogen, helium, nitrogen, oxygen, and olefins.

### < System for producing a porous polymer film >

According to the method for producing a porous polymer film according to one embodiment of the present disclosure, while the preliminary porous films, for example the first preliminary porous film (A), the second preliminary porous film (B), and/or the first preliminary porous film (C) are being wound, each of the preliminary porous films being wound may be irradiated with an electron beam.

The electron beam irradiation unit may, for example, refer to a curing unit or a crosslinking unit.

The method for producing a porous polymer film may be performed using equipment for producing a porous polymer film, including: for example, at least one transport roller configured to move a preliminary porous film; a winder including a winder roller and configured to wind the preliminary porous film; and an electron beam irradiation device including an electron beam irradiation unit, wherein the electron beam irradiation device is disposed at a distance of 100 cm or less from a central axis of the winder roller, and the electron beam irradiation unit is arranged toward the central axis of the winder roller.

According to the system for producing a porous polymer film, crosslinking may be performed by electron beam irradiation during winding, thereby enabling high-speed and highvolume production of porous polymer films at reduced costs.

FIG. 8 is a schematic view illustrating a system for producing a porous polymer film according to an exemplary embodiment.

In a transport unit P2, the preliminary porous film may be moved, for example, in a straight line or in a Z-shaped path. When the electron beam irradiation unit does not irradiate the preliminary porous film during winding but instead irradiates it while the film is moved linearly in the transport unit P2, the production speed may decrease because sufficient irradiation time must be secured. In addition, multiple electron beam irradiation devices may be required, significantly increasing investment costs.

Furthermore, if the electron beam is not irradiated during winding but is irradiated while the preliminary porous film is moved in a Z-shaped path in the transport unit P2, multiple electron beam irradiation devices must be installed, and a larger irradiation region is required. As a result, the investment cost may greatly increase, and medium-energy or higher electron beams may be required to ensure uniform irradiation.

According to the system for producing a porous polymer film according to one embodiment of the present disclosure, while the preliminary porous films, for example the first preliminary porous film (A), the second preliminary porous film (B), and/or the first preliminary porous film (C) are being wound, each of the preliminary porous films being wound may be irradiated with an electron beam, thereby eliminating the need to install multiple electron beam irradiation devices, allowing the use of low-energy electron beam irradiation, preventing the requirement for a large irradiation region, and increasing production speed.

In one embodiment, the system may further include a loading unit P1 configured to unwind the preliminary porous film wound into a roll form and supply it to the transport unit P2.

In one embodiment, in an electron beam irradiation unit P3, the winding may be performed by a winder including a winder roller, and the electron beam irradiation of the preliminary porous film being wound may be performed in a direction toward the central axis of the winder roller.

Referring to FIG. 8, the production system may include an unwinder including an unwinder roller 100, a winder including a winder roller 200, and an electron beam irradiation device 300.

For example, the unwinder and the winder may further include a driving unit such as a motor for driving each roller, and a frame unit for supporting respective components.

A preliminary porous film 10 may be provided by an unwinder roller 100. The preliminary porous film 10 may be provided to the system in a wound state, and as the unwinder roller 100 rotates, the preliminary porous film 10 may be unwound and supplied to the winder roller 200.

In one embodiment, reference may be made to the foregoing description in the production method regarding the speeds of unwinding and winding. The rotation speed may be adjusted based on factors such as the production scale, the diameter of the unwinder roller 100, the thickness of the preliminary porous film 10, and the energy required for curing.

As a non-limiting example, the diameter of the preliminary porous film in roll form wound around the unwinder roller 100 may be, for example, 10 cm to 30 cm. The diameter refers to the cross-sectional diameter of the roll of the preliminary porous film and may refer to the cross-sectional diameter before unwinding. The diameter of the unwinder roller 100 may be adjusted based on factors such as the production scale, the thickness of the preliminary porous film 10, the energy required for curing, and the system installation space.

The unwinder roller 100 may be disposed in the loading unit P1. The loading unit P1 may be a raw material supply region of the system and may be in a vacuum atmosphere $At_{vac}$. The "vacuum atmosphere" may include not only a complete vacuum but also a quasi-vacuum of $10^{-1}$ torr or less (approx. 13.33 Pa or less).

In one embodiment, the system may further include a supply unit that extrudes and stretches a raw material containing a polymer to form a preliminary porous film, winds it in a roll form, and supplies it to the loading unit.

Reference may be made to the foregoing description in the production method regarding the preliminary porous film 10.

The preliminary porous film 10 supplied from the unwinder roller 100 may be conveyed to the winder roller 200 by at least one transport roller 401 to 407. Although FIG. 8 illustrates seven transport rollers, the number of transport rollers is not limited thereto and may be adjusted based on the installation space of the system, the pore diameter of the preliminary porous film 10, the type of resin, and/or the mass of resin. For example, the number of transport rollers may be 1 to 20.

The distance traveled by the preliminary porous film 10 before being wound onto the winder roller 200 may be adjusted depending on the number of the transport rollers 401 to 407, their arrangement, or positions.

As shown in FIG. 8, transport rollers 401 to 407 are arranged in a zigzag pattern between the unwinder roller 100 and the winder roller 200 to convey the preliminary porous film 10 to the winder roller 200 without damage.

Some of the transport rollers 402 to 405 may be disposed in the transport unit P2. The transport unit P2 may be disposed, for example, between the unwinder roller 100 and the winder roller 200, and may be a region through which the preliminary porous film 10 passes while moving from the unwinder roller 100 to the winder roller 200.

The transport unit P2 may be in a vacuum atmosphere $At_{vac}$. Hereinafter, the vacuum atmospheres of the loading unit (P1) and the transport unit (P2) may be referred to as $At_{vac,1}$ and $At_{vac,2}$, respectively. The vacuum atmosphere $At_{vac,2}$ of the transport unit P2 may be the same as or different from the vacuum atmosphere $At_{vac,1}$ of the loading unit P1.

In one embodiment, the pressure in the transport unit P2 may be lower than the pressure in the loading unit P1.

For example, the vacuum atmosphere $At_{vac,1}$ of the loading unit P1 may be a quasi-vacuum of $10^{-1}$ torr or less (approx. 13.33 Pa or less).

Reference may be made to the foregoing description regarding the vacuum atmosphere chamber, for example, with respect to the vacuum level of the transport unit P2.

The preliminary porous film 10 passing through the transport unit P2 may be wound around the winder roller 200. For example, the supplied preliminary porous film 10 may be wound as the winder roller 200 rotates.

Reference may be made to the foregoing description regarding the diameter of the rollshaped porous polymer film wound around the winder roller 200. The diameter of the winder roller 200 may be adjusted in consideration of factors such as the production scale, the thickness of the preliminary porous film 10, the energy required for curing, and the system installation space.

The winder roller 200 may be disposed in the electron beam irradiation unit P3. In the electron beam irradiation unit P3, the preliminary porous film 10 may be crosslinked or cured by electron beam irradiation. The electron beam irradiation device 300 may be disposed in the electron beam irradiation unit P3, and the electron beam irradiation device 300 may irradiate an electron beam onto the preliminary porous film 10 wound around the winder roller 200.

The electron beam irradiation device 300 may irradiate an electron beam toward the central axis of the winder roller 200. Accordingly, the preliminary porous film 10 continuously wound around the winder roller 200 may be crosslinked or cured by electron beam irradiation. Since the preliminary porous film 10 may be repeatedly exposed to the electron beam by the rotating winder roller 200, even low-energy electron beam irradiation may sufficiently crosslink or cure the preliminary porous film 10.

As shown in FIG. 8, the electron beam irradiation device 300 may be disposed above the winder roller 200, but is not limited thereto. In another embodiment, the electron beam irradiation device 300 may be disposed below the winder roller 200 so that the electron beam is irradiated upward.

Reference may be made to the foregoing description regarding the electron beam irradiation device 300 in the production method.

The preliminary porous film 10 in contact with the surface of the winder roller 200 may pass through an electron beam irradiation region $A_{rad}$ multiple times as the winder roller 200 rotates. Each time the low-energy electron beam passes through the electron beam irradiation region $A_{rad}$, the preliminary porous film 10 may be partially crosslinked or cured. As the number of rotations of the winder roller 200 increases, the degree of crosslinking or curing of the preliminary porous film 10 may also increase.

As the winder roller 200 rotates, the preliminary porous film 10 may be continuously wound, and the total thickness of the multi-layered preliminary porous film 10 wound on the surface of the winder roller 200 may increase. Accordingly, any region of the preliminary porous film 10 in contact with the surface of the winder roller 200 may gradually become farther from the electron beam irradiation device 300, resulting in a decrease or absence of the electron beam dose reaching the region. Therefore, the preliminary porous film 10 may be irradiated with an electron beam such that an appropriate accumulated dose is achieved.

For example, any region of the preliminary porous film 10 may pass through the electron beam irradiation region $A_{rad}$ of the electron beam irradiation device 300 from 100 to 300 times. The number of passes may be adjusted in consideration of factors such as the energy density and acceleration voltage of the electron beam, the diameter of the winder roller 200, the distance between the electron beam irradiation device 300 and the central axis of the winder roller 200, the thickness of the preliminary porous film 10, and the energy required for curing.

The preliminary porous film 10 may be cooled, for example, by nitrogen purging $At_{N2}$ in the electron beam irradiation unit P3. This can prevent temperature increases and subsequent polymer degradation caused by the heat generated during electron beam irradiation.

The unwinder roller 100 and the winder roller 200 may rotate together. For example, during the initial stage of supplying the preliminary porous film 10, only the unwinder roller 100 may rotate while the preliminary porous film 10 is conveyed toward the winder roller 200 by the transport rollers 401 to 407. As the preliminary porous film 10 begins to be wound onto the winder roller 200, the unwinder roller 100 and the winder roller 200 may rotate at the same speed. Furthermore, in the later stage, when the preliminary porous film 10 wound around the unwinder roller 100 has been completely supplied, only the winder roller 200 may rotate.

In one embodiment, even after the preliminary porous film 10 is fully wound onto the winder roller 200, the winder roller 200 may continue to rotate while irradiating the electron beam. The additional rotational amount of the winder roller 200 may be determined to ensure sufficient curing of the last preliminary porous film 10 wound onto the winder roller 200.

For example, the porous polymer film 20 produced from the production system may have a porosity of 10% to 80%. Through the crosslinking or curing process, bonds may be formed between the polymer chains of the preliminary porous film 10, and thus, the porosity of the porous polymer film 20 may be lower than that of the preliminary porous film 10.

For example, the porous polymer film 20 produced from the production system may have a pore diameter of 200 nm or less. Through the crosslinking or curing process, bonds may be formed between the polymer chains of the preliminary porous film 10, and thus, the pore diameter of the porous polymer film 20 may be smaller than that of the preliminary porous film 10.

### <Equipment for producing a porous polymer film>

According to the method for producing a porous polymer film according to one embodiment of the present disclosure, while the preliminary porous films, for example the first preliminary porous film (A), the second preliminary porous film (B), and/or the first preliminary porous film (C) are being wound, each of the preliminary porous films being wound may be irradiated with an electron beam.

The method for producing a porous polymer film may be performed using equipment for producing a porous polymer film, including: for example, at least one transport roller configured to move a preliminary porous film; a winder including a winder roller and configured to wind the preliminary porous film; and an electron beam irradiation device including an electron beam irradiation unit, wherein the electron beam irradiation device is disposed at a distance of 100 cm or less from a central axis of the winder roller, and the electron beam irradiation unit is arranged toward the central axis of the winder roller.

According to the system for producing a porous polymer film, crosslinking may be performed by electron beam irradiation during winding, thereby enabling high-speed and highvolume production of porous polymer films at reduced costs.

In one embodiment, the production equipment may further include an unwinder configured to unwind a preliminary porous film wound into a roll form, the unwinder including an unwinder roller, and the transport roller may move the preliminary porous film from the unwinder toward the winder.

In one embodiment, the production equipment may further include a vacuum atmosphere chamber including the electron beam irradiation unit at the rear end of the chamber. The electron beam irradiation unit may be mounted inside or outside the vacuum atmosphere chamber.

In one embodiment, the winder roller may be mounted inside the vacuum atmosphere chamber.

Reference may be made to the foregoing description of the vacuum atmosphere chamber in the production method.

In one embodiment, the production equipment may further include a liquid treatment chamber.

In one embodiment, the production equipment may further include a liquid treatment chamber and an inert gas atmosphere chamber.

In one embodiment, the winder roller may be mounted outside the liquid treatment chamber.

In one embodiment, the winder roller may be mounted inside the inert gas atmosphere chamber disposed downstream of the liquid treatment chamber.

Reference may be made to the foregoing description of the liquid treatment chamber and the inert gas atmosphere chamber in the production method.

In one embodiment, the inert gas atmosphere chamber may further include a suction roller at the front end of the chamber and an electron beam irradiation unit at the rear end of the chamber.

In one embodiment, the winder roller may be mounted inside the inert gas atmosphere chamber including the suction roller and the electron beam irradiation unit.

Reference may be made to the foregoing description of the inert gas atmosphere chamber including the suction roller and the electron beam irradiation unit in the production method.

As a non-limiting example, the above-described chambers may be formed of a material such as a metal, an alloy, or a plastic.

In one embodiment, the production equipment may further include an extrusion and stretching device configured to extrude and stretch a raw material containing a polymer to form a preliminary porous film. The raw material may include, for example, polymer pellets or a melt containing a polymer and/or oil. Reference may be made to the foregoing description regarding the polymer in the production method.

As a non-limiting example, the extrusion and stretching device may include a die such as a T-die, and a uniaxial or biaxial stretching device such as a tenter device.

In one embodiment, the equipment for producing a porous polymer film may further include known components required for manufacturing the film by a roll-to-roll process, as needed, without particular limitation.

The production equipment may further include, for example, a mass flow controller (MFC), a pressure regulator, a vacuum pump, a pressure sensor, a purging device, a cooling device, a gas filter, and a plurality of nozzle units.

The above-described porous polymer film 20 may be utilized in various fields. For example, the porous polymer film may be used in the electrical and electronic field for purifying chemicals required for secondary battery separators and semiconductor processes; in the bio field for hemodialysis, artificial lung membranes, plasma purification membranes, and respirable medical clothing serving as artificial kidneys; in the water treatment field for isolating pathogenic bacteria in water and wastewater treatment plants and removing salt from seawater; and in the petrochemical field for purifying chemicals or organic solvents and for separating gases, such as $CO_2$ separation membranes.

Hereinafter, embodiments of the present disclosure will be further described with reference to specific experimental examples.

**Examples**

**Examples 1 to 3 and Comparative Examples 1 and 2**

Porous polymer films were produced in the same manner as in Examples 1 to 3 and Comparative Examples 1 and 2, except that the vacuum level in the vacuum atmosphere chamber and the film travel time before electron beam irradiation in the vacuum atmosphere chamber were changed as shown in Table 1.

A preliminary porous polyethylene (PE) film (porosity: about 45%) having a thickness of 10 $\mu$m was introduced into a vacuum atmosphere chamber by a roll-to-roll process at room temperature. A film transport unit was disposed at the front end of the vacuum atmosphere chamber, and an electron beam irradiation unit was disposed at the rear end thereof.

The preliminary porous film traveling in vacuum atmosphere chamber was irradiated with an electron beam by the electron beam irradiation unit disposed at the rear end of the chamber. The porous polymer film crosslinked by the electron beam irradiation was discharged from the vacuum atmosphere chamber. The discharged porous polymer film was subsequently introduced into an additional vacuum atmosphere chamber and wound into a roll form by a winder roller installed in the vacuum atmosphere chamber.

The electron beam irradiation conditions were as follows:

- Acceleration voltage: 1 MeV
- Single irradiation dose: 100 kGy

Accordingly, a porous polymer film having a thickness of 10 $\mu$m wound into a roll form was produced.

The porosity of the preliminary porous film was measured as follows:

The preliminary porous film was cut into a rectangle specimen having a size of $D_1$ cm $\times$ $D_2$ cm (thickness: T, $\mu$m). The mass (M, g) of the specimen was measured using a precision balance, and the skeletal density of PE ($\rho$, g/cm$^3$) was used to calculate the porosity according to the following equation.

$$\text{Porosity} = 1 - (M \times 10000) / (D_1 \times D_2 \times T \times \rho)$$

**Examples 4 to 6 and Comparative Examples 3 and 4**

Porous polymer films were produced in the same manner as in Examples 4 to 6 and Comparative Examples 3 and 4, except that the type of non-reactive liquid was changed as shown in Table 2 below.

A preliminary porous polyethylene (PE) film having a thickness of 10 $\mu$m was continuously introduced into a liquid treatment chamber and a nitrogen gas atmosphere chamber by a roll-to-roll process at room temperature. The liquid treatment chamber was a liquid-filled chamber containing the non-reactive liquids listed in Table 2, and the preliminary porous films were conveyed while being immersed in the non-reactive liquid. An electron beam irradiation unit was disposed inside the nitrogen gas atmosphere chamber.

The preparatory porous film traveling in the nitrogen ($N_2$) gas atmosphere chamber was irradiated with an electron beam. The porous polymer film crosslinked by the electron beam irradiation was discharged from the nitrogen gas atmosphere chamber. The discharged porous polymer film was wound into a roll form by a winder roller under an air atmosphere.

The electron beam was irradiated within about 60 sec (about 30 sec) after the preliminary porous film was discharged from the liquid treatment chamber.

The electron beam irradiation conditions were as follows:

- Acceleration voltage: 1 MeV
- Single irradiation dose: 100 kGy

Accordingly, a porous polymer film having a thickness of 10 $\mu$m wound into a roll form was produced.

**Examples 7 and 8 and Comparative Examples 5 and 6**

Porous polymer films were produced in the same manner as in Examples 7 and 8 and Comparative Examples 5 and 6, except that the suction pressure and travel time of the suction roller disposed at the front end of the inert gas atmosphere chamber were changed as shown in Table 3.

A preliminary porous polyethylene (PE) film having a thickness of 10 $\mu$m was introduced into a nitrogen ($N_2$) gas atmosphere chamber by a roll-to-roll process at room temperature. A suction roller was disposed at the front end of the nitrogen gas atmosphere chamber, and an electron beam irradiation unit was disposed at the rear end.

The preliminary porous film traveling in the nitrogen gas atmosphere chamber was irradiated with an electron beam from the electron beam irradiation unit disposed at the rear end thereof. The porous polymer film crosslinked by the electron beam irradiation was discharged from the nitrogen gas atmosphere chamber. The discharged porous polymer film was wound into a roll form by a winder roller under an air atmosphere.

The electron beam was irradiated within about 60 sec (about 30 sec) after the preliminary porous film passed through the suction roller.

The electron beam irradiation conditions were as follows:

- Acceleration voltage: 1 MeV
- Single irradiation dose: 100 kGy

Accordingly, a porous polymer film having a thickness of 10 μm wound into a roll form was produced.

**Examples 9-1 and 9-2, Reference Examples 1-1 and 1-2**

Example 9-1

The preliminary porous film wound on a 6-inch core was mounted on a first roll and traveled at a speed of 100 m/min. The preliminary porous film was then introduced into the vacuum atmosphere chamber used in Example 1.

The preliminary porous film was wound on a second roll, which was mounted in the vacuum atmosphere chamber and had a cellulose triacetate (CTA) dosimeter installed on its surface, and the electron beam was continuously irradiated for 1 minute.

After 100 m of winding, a porous polymer film was wound to a thickness of 1.8 mm from the surface of the second roll.

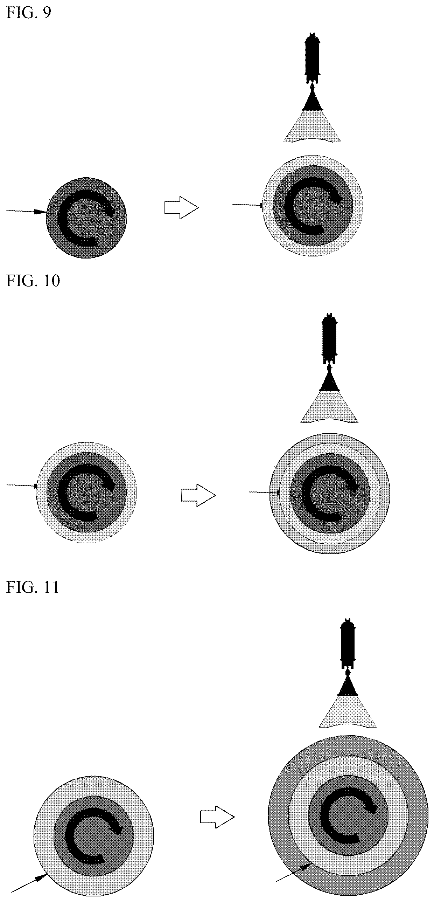

The accumulated dose over 1 minute was measured using the CTA dosimeter installed at the surface of the winder roller. FIG. 9 is a schematic view illustrating the direction of the cumulative irradiation dose measurement process in Example 9-1. The cumulative irradiation dose over 1 minute was measured in the direction indicated by the arrow.

The results are shown in Table 1 below.

Example 9-2

In the same manner as Example 9-1, 300 m of preliminary porous film was wound onto the second roll, and a cellulose triacetate (CTA) dosimeter was installed. The preliminary porous film was then wound for an additional 100 m, while the electron beam was continuously irradiated for 1 minute.

After 100 m of winding, a porous polymer film was wound to a thickness of 7.2 mm from the surface of the second roll.

The cumulative irradiation dose over 1 minute was measured using the CTA dosimeter positioned at a point 5.4 mm from the surface of the winder roller. FIG. 10 is a schematic view illustrating the direction of the cumulative irradiation dose measurement process in Example 9-2. The cumulative irradiation dose over 1 minute was measured in the direction indicated by the arrow.

The results are shown in Table 1 below.

Reference Example 1-1

A 200 m preliminary porous film was wound around a winder roller in the same manner as Example 9-1, except that no electron beam irradiation was performed. The preliminary porous film was then wound for an additional 100 m, while the electron beam was continuously irradiated for 1 minute.

After 100 m of winding, a porous polymer film was wound from the surface of the second roll to a thickness of 5.4 mm.

The cumulative irradiation dose was measured over 1 minute using the CTA dosimeter installed at the surface of the winder roller.

The results are shown in Table 1 below.

Reference Example 1-2

A 300 m preliminary porous film was wound around a winder roller in the same manner as Example 9-1, except that no electron beam irradiation was performed. The preliminary porous film was then wound for an additional 100 m, while the electron beam was continuously irradiated for 1 minute.

**After** 100 m of winding, a porous polymer film was wound to a thickness of 7.2 mm from the surface of the second roll.

The cumulative irradiation dose over 1 minute was measured using the CTA dosimeter installed at the surface of the winder roller.

FIG. 11 is a schematic view illustrating the direction of the cumulative irradiation dose measurement process in Reference Examples 1-1 and 1-2. The cumulative irradiation dose over 1 minute was measured in the direction indicated by the arrow.

For reference, the process for measuring the cumulative irradiation dose was identical to that of Reference Examples 1-1 and 1-2, except that 200 m and 300 m, respectively, were wound without electron beam irradiation before an additional 100 m of winding was performed. This procedure is presented in a single diagram.

The results are shown in Table 1 below.

[TABLE 1]

|  | Example 9-1 | Example 9-2 | Reference Example 1-1 | Reference Example 1-2 |
|---|---|---|---|---|
| Winding length (m) | 0-100 | 300-400 | 200-300 | 300-400 |
| Required electron beam penetration depth (mm) | 1.8 | 1.8 | 5.4 | 7.2 |
| Irradiation time (min) | 1 | 1 | 1 | 1 |
| Cumulative irradiation dose (kGy) | 100 | 100 | 60 | 0 |

Referring to Table 1, in Example 9-1, the preliminary porous film on the surface of the winder roller was treated to a cumulative irradiation dose of 100 kGy.

In Example 9-2, the cumulative irradiation dose was measured to be 100 kGy over 1 minute at the 300 m winding point, demonstrating that the entire region of the preliminary porous film was cured to a nearly uniform level during continuous winding of the winder roller.

Reference Examples 1-1 and 1-2 demonstrate that as the winding length of the preliminary porous film increased, the thickness of the porous polymer film wound on the surface of the winder roller (i.e., the second roll) gradually increased. Consequently, the irradiation dose of the electron beam reaching the preliminary porous film on the surface of the second roll gradually decreased. Specifically, it was confirmed that after the preliminary porous film was wound for 300 m, the cumulative irradiation dose on the surface of the second roll was 0 kGy, indicating that the electron beam did not reach the surface.

**Experimental Examples**

Experimental Example 1: Oxygen substitution degree

(1) Before placing the preliminary porous films in Examples 1 to 3 and Comparative Examples 1 and 2 into the vacuum atmosphere chamber, the pore volume ($V_P$) was calculated by multiplying the total volume ($V_F$) of each film by its porosity ($R_P$), and the calculated pore volume ($V_P$), the atmospheric absolute pressure of about 101.325 kPa, the room temperature of about 298.15 K, and the gas constant (R) of 8.314 J/(mol·K) were then applied to the ideal gas equation (PV = nRT) to calculate the total molar amount of gas in the pores ($n_T$).

The total molar amount of oxygen present within the pores ($n_I$) was calculated by multiplying the total molar amount of gas in the pores ($n_I$) by the mole fraction of oxygen in the atmosphere ($n_O$), which is about 0.21

The increase in the partial pressure of oxygen ($P_O$) due to the oxygen removed from the preliminary porous film in the vacuum atmosphere chamber was measured.

The increase in the partial pressure of oxygen ($P_O$), the effective volume ($V_C$) of the vacuum atmosphere chamber, the internal temperature ($T_C$) of the vacuum atmosphere chamber, and the gas constant (R) of 8.314 J/(mol·K) were applied to the ideal gas equation to calculate the total molar amount of oxygen removed from the pores ($n_F$).

The ratio ($n_I/n_F$) of the total molar amount of oxygen removed from the pores ($n_F$) to the total molar amount of oxygen present within the pores ($n_I$) was calculated as the oxygen substitution degree.

(2) The total molar amount of oxygen present within the pores ($n_I$) of each of the preliminary porous films in Examples 4 to 6 and Comparative Examples 3 and 4 before being introduced into the liquid treatment chamber was calculated using the same method described above.

The increase in the partial pressure of oxygen ($P_O$) due to the oxygen removed from the preliminary porous film in the liquid treatment chamber was measured.

The increase in the partial pressure of oxygen ($P_O$), the effective volume ($V_C$) of the liquid treatment chamber, the internal temperature ($T_C$) of the liquid treatment chamber, and the gas constant (R) of 8.314 J/(mol·K) were applied to the ideal gas equation to calculate the total molar amount of oxygen removed from the pores ($n_F$).

The ratio ($n_I/n_F$) of the total molar amount of oxygen removed from the pores ($n_F$) to the total molar amount of oxygen present within the pores ($n_I$) was calculated as the oxygen substitution degree.

(3) The total molar amount of oxygen present within the pores ($n_I$) of each of the preliminary porous films in Examples 7 and 8 and Comparative Examples 5 and 6 before being introduced into the nitrogen gas atmosphere chamber was calculated using the same method described above.

The increase in the partial pressure of oxygen ($P_O$) due to the oxygen removed from the preparatory porous film in the nitrogen gas atmosphere chamber was measured.

The increase in the partial pressure of oxygen ($P_O$), the effective volume ($V_C$) of the nitrogen gas atmosphere chamber, the internal temperature ($T_C$) of the nitrogen gas atmosphere chamber, and the gas constant (R) of 8.314 J/(mol·K) were applied to the ideal gas equation to calculate the total molar amount of oxygen removed from the pores ($n_F$).

The ratio ($n_I/n_F$) of the total molar amount of oxygen removed from the pores ($n_F$) to the total molar amount of oxygen present within the pores ($n_I$) was calculated as the oxygen substitution degree.

Experimental Example 2: Puncture strength

The puncture strength of the porous polymer film was measured using an INSTRON Universal Test Machine (Model 3345). An indentation probe equipped with a pin tip having a diameter of 1.0 mm and a radius of curvature of 0.5 mm was used for the test, and the indentation speed was set to 120 mm/min.

The porous polymer film specimens were cut to a size of 50 mm × 50 mm and were secured flatly on the lower jig of the tester. The edges of the specimens were clamped to prevent detachment or wrinkling.

The indentation probe was moved perpendicular to the film surface, and the resulting force-displacement curve was recorded. The puncture strength was evaluated as a value (N/$\mu$m) obtained by dividing the maximum load (N) at the point of initial film fracture by the film thickness ($\mu$m).

All specimens were stabilized for 24 hours or more at 25 ± 2 °C and 50 ± 5% relative humidity before testing.

Experimental Example 3: Melt fracture temperature

The thermal-mechanical stability of the porous polymer films was evaluated using a thermomechanical analyzer (TMA).

The test was conducted under a constant load of 0.015 N while heating the specimen to a maximum temperature of 220 °C at a heating rate of 5 °C/min.

The temperature at which the film specimen fractured under the applied tension during the test was evaluated as the melt fracture temperature. The fracture point was determined by a sudden elongation, breakage, or abrupt change in the TMA displacement curve of the specimen.

All specimens were stabilized for 24 hours or more at 25 ± 2 °C and 50 ± 5% relative humidity before testing.

[TABLE 2]

| | Vacuum atmosphere chamber | | Vacuum index Iv | Evaluation result | | |
|---|---|---|---|---|---|---|
| | Vacuum level $V_1$ (torr) | Travel time $V_2$ (sec) | | Oxygen substitution degree (%) | Puncture strength (N/$\mu$m) | Melt fracture temperature (°C) |
| Example 1 | $10^{-1}$ | 30 | 3 | 100 | 0.452 | 210 |
| Example 2 | $10^{-1}$ | 60 | 6 | 100 | 0.452 | 210 |
| Example 3 | $10^{-3}$ | 30 | 300 | 100 | 0.452 | 210 |
| Comparative Example 1 | 10 | 30 | 0.03 | 30 | 0.352 | 150 |
| Comparative Example 2 | 10 | 60 | 0.06 | 50 | 0.380 | 150 |

Referring to Table 2, the porous polymer films according to the examples were produced using a production method including a process of passing the preliminary porous film through a vacuum atmosphere chamber under conditions where the vacuum index ($I_V$) was 0.1 or more. The porous polymer films according to the examples exhibited high puncture strength and melt fracture temperature, since the crosslinking reaction induced by electron beam irradiation proceeded effectively without radical consumption and/or byproduct formation caused by oxygen.

The porous polymer films of the comparative examples exhibited low puncture strength and melt fracture temperature, as a result of interference with the electron beam-induced crosslinking reaction by oxygen radicals and/or byproduct formation caused by oxygen.

[TABLE 3]

| | Non-reactive liquid | | Preliminary porous film | | Evaluation result | | |
|---|---|---|---|---|---|---|---|
| | Classification | Surface tension $L_1$ (mN/m) | Surface energy $L_2$ (mN/m) | Impregnation index $I_L$ | Oxygen substitution degree (%) | Puncture strength (N/$\mu$m) | Melt fracture temperature (°C) |
| Example 4 | Ethanol | 22.1 | 31 | 1.40 | 100 | 0.452 | 210 |
| Example 5 | Acetone | 23.7 | 31 | 1.31 | 100 | 0.452 | 210 |
| Example 6 | Propylene glycol | 36 | 31 | 0.86 | 100 | 0.452 | 210 |
| Comparative Example 3 | Ethylene glycol | 47.7 | 31 | 0.65 | 30 | 0.352 | 150 |
| Comparative Example 4 | DI water | 72 | 31 | 0.43 | 10 | 0.295 | 150 |

In Table 3, the surface tension was measured at 25 ± 2 °C in accordance with ISO 304, and the surface energy was measured at 25 ± 2 °C in accordance with ISO 19403.

In Table 3, the boiling points of ethanol, acetone, propylene glycol, ethylene glycol, and DI water were approximately 78 °C, 56 °C, 188 °C, 197 °C, and 100 °C, respectively.

Referring to Table 3, the porous polymer films according to the examples were produced using a production method including a process of passing the preliminary porous film through a liquid treatment chamber under conditions where the impregnation index ($I_L$) was 0.8 or more. The porous polymer films according to the examples exhibited high puncture strength and melt fracture temperature, since the crosslinking reaction induced by electron beam irradiation proceeded effectively without radical consumption and/or byproduct formation caused by oxygen.

The porous polymer films of the comparative examples exhibited low puncture strength and melt fracture temperature, as the electron beam-induced crosslinking reaction did not proceed smoothly due to oxygen radicals and/or byproduct formation caused by oxygen.

[TABLE 4]

| | Suction roller | | Suction index $I_S$ | Evaluation result | | |
|---|---|---|---|---|---|---|
| | Suction pressure $S_1$ (mmaq) | Passing time $S_2$ (sec) | | Oxygen substitution degree (%) | Puncture strength (N/$\mu$m) | Melt fracture temperature (°C) |
| Example 7 | 5000 | 0.6 | 30 | 100 | 0.452 | 210 |
| Example 8 | 1000 | 0.6 | 6 | 100 | 0.452 | 210 |
| Comparative Example 5 | 100 | 0.6 | 0.6 | 50 | 0.38 | 150 |
| Comparative Example 6 | 100 | 0.9 | 0.9 | 50 | 0.38 | 150 |

Referring to Table 4, the porous polymer films according to the examples were produced using a production method including a process of passing the preliminary porous film through a suction roller within an inert gas atmosphere chamber under conditions where the suction index $I_S$ was 1 or more. The porous polymer films according to the examples exhibited high puncture strength and melt fracture temperature, since the crosslinking reaction induced by electron beam irradiation proceeded effectively without radical consumption and/or byproduct formation caused by oxygen.

The porous polymer films of the comparative examples exhibited low puncture strength and melt fracture temperature, as the electron beam-induced crosslinking reaction did not proceed smoothly due to oxygen radicals and/or byproduct formation caused by oxygen, resulting in an insufficient formation of crosslinked chains.

**Claims**

1. A method for producing a porous polymer film (20), the method comprising:

   preparing a vacuum atmosphere chamber including an electron beam irradiation unit (P3) at a rear end of the chamber; and
   introducing a first preliminary porous film (A) into the vacuum atmosphere chamber,
   wherein the first preliminary porous film (A) passes through the vacuum atmosphere chamber under a condition in which a vacuum index $I_V$, defined by Equation 1 below, satisfies 0.1 to 3,000:

$$[\text{Equation 1}]$$

$$I_V = (V_2 / V_1) \times (1 / 100),$$

   in Equation 1, $V_1$ denotes the vacuum level (torr) within the vacuum atmosphere chamber, and $V_2$ denotes the film travel time (sec) of the first preliminary porous film (A) from the time it is introduced into the vacuum atmosphere chamber until it is irradiated with an electron beam by the electron beam irradiation unit (P3).

2. The method for producing a porous polymer film (20) according to claim 1,

   wherein, in Equation 1, $V_1$ is $1.0 \times 10^{-6}$ torr to $7.6 \times 10^2$ torr, and/or
   wherein, in Equation 1, $V_2$ is 1 sec to 180 sec.

3. The method for producing a porous polymer film (20) according to claim 1 or 2, further comprising irradiating the first preliminary porous film (A) with an electron beam in the electron beam irradiation unit (P3),
   preferably wherein, while the first preliminary porous film (A) is wound in the electron beam irradiation unit (P3), the first preliminary porous film (A) is irradiated with the electron beam.

4. A method for producing a porous polymer film (20), the method comprising:

   introducing a first preliminary porous film (B) into a liquid treatment chamber which is filled with a non-reactive liquid or sprays a non-reactive liquid,
   wherein the first preliminary porous film (B) passes through the liquid treatment chamber under a condition in which an impregnation index $I_L$, defined by Equation 2 below, satisfies 0.8 or more:

$$[\text{Equation 2}]$$

$$I_L = L_2 / L_1,$$

   in Equation 2, $L_1$ denotes the surface tension (mN/m) of the non-reactive liquid, and $L_2$ denotes the surface energy (mN/m) of the first preliminary porous film (B).

5. The method for producing a porous polymer film (20) according to claim 4,

   wherein, in Equation 2, anyone of the following conditions (i) to (iv) apply, respectively alone or in combination:

   (i) $L_1$ is 80 mN/m or less;
   (ii) $L_2$ is 80 mN/m or less;
   (iii) an absolute value of a difference between $L_1$ and $L_2$ ($L_2$-$L_1$) is 20 mN/m or less; and/or

(iv) the impregnation index $I_L$ satisfies 0.8 or more and 2.0 or less, or 0.8 to 1.8, or 0.8 to 1.5, or 0.8 to 1.4.

6. The method for producing a porous polymer film (20) according to claim 4 or 5, wherein the non-reactive liquid includes at least one organic solvent selected from the group consisting of organic solvents having a boiling point of 40 ° C or more, and optionally 300 ° C or less.

7. The method for producing a porous polymer film (20) according to any one of claims 4 to 6, further comprising irradiating the second preliminary porous film (B) discharged from the liquid treatment chamber with an electron beam, preferably wherein, while the second preliminary porous film (B) is wound in the electron beam irradiation unit (P3), the second preliminary porous film (B) is irradiated with the electron beam.

8. A method for producing a porous polymer film (20), the method comprising:

preparing an inert gas atmosphere chamber including a suction roller at a front end of the chamber and an electron beam irradiation unit (P3) at a rear end of the chamber; and
introducing a first preliminary porous film (C) into the inert gas atmosphere chamber,
wherein the first preliminary porous film (C) travels on the suction roller under a condition in which a suction index $I_S$, defined by Equation 3 below, satisfies 1 or more:

$$[\text{Equation 3}]$$

$$I_S = (S_1 \times S_2) / 100,$$

in Equation 3, $S_1$ denotes the suction pressure (mmaq) of the suction roller, and $S_2$ denotes the time (sec) required for the first preliminary porous film (C) to travel on the suction roller.

9. The method for producing a porous polymer film (20) according to claim 8,
wherein in Equation 3, anyone of the following conditions (v) to (vii) apply, respectively alone or in combination:

(v) $S_1$ is 5,000 mmaq or less (49,033.25 Pa or less);
(vi) $S_2$ is 0.1 sec to 20 sec; and/or
(vii) suction index $I_S$ is at most 1,000, or at most 900, or at most 700, or at most 500, or at most 200, or at most 100.

10. The method for producing a porous polymer film (20) according to any one of claims 8 to 9, further comprising irradiating the first preliminary porous film (C) with an electron beam in the electron beam irradiation unit (P3), preferably wherein, while the first preliminary porous film (C) is wound in the electron beam irradiation unit (P3), the first preliminary porous film (C) is irradiated with an electron beam.

11. A system for producing a porous polymer film (20), the system comprising:

at least one transport roller (401) configured to move a preliminary porous film (10);
a winder including a winder roller (200) and configured to wind the preliminary porous film (10); and
an electron beam irradiation device (300) including an electron beam irradiation unit (P3),
wherein the system further comprises one or more of the following chambers (a), (b) and/or (c), respectively alone or in combination:

(a) a vacuum atmosphere chamber including the electron beam irradiation unit (P3) at a rear end of the chamber, the vacuum atmosphere chamber being provided at a condition in which a vacuum index $I_V$, defined by Equation 1 below, satisfies 0.1 to 3,000:

$$[\text{Equation 1}]$$

$$I_V = (V_2 / V_1) \times (1 / 100),$$

in Equation 1, $V_1$ denotes a vacuum level (torr) within the vacuum atmosphere chamber, and $V_2$ denotes a film travel time (sec) of a first preliminary porous film (A) after introduction into the vacuum atmosphere chamber and before irradiation with an electron beam by the electron beam irradiation unit (P3);

(b) a liquid treatment chamber which is filled with a non-reactive liquid or adapted to spray a non-reactive liquid, the liquid treatment chamber being provided at a condition in which an impregnation index $I_L$, defined by Equation 2 below, satisfies 0.8 or more and, preferably, 2.0 or less:

$$[\text{Equation 2}]$$

$$I_L = L_2 / L_1,$$

in Equation 2, $L_1$ denotes a surface tension (mN/m) of the non-reactive liquid, and $L_2$ denotes a surface energy (mN/m) of a first preliminary porous film (B);

and/or

(c) an inert gas atmosphere chamber including a suction roller at a front end of the chamber and an electron beam irradiation unit (P3) at a rear end of the chamber, the suction roller being adapted such that a first preliminary porous film (C) travels on the suction roller under a condition in which a suction index $I_S$, defined by Equation 3 below, satisfies 1 or more:

$$[\text{Equation 3}]$$

$$I_S = (S_1 \times S_2) / 100,$$

in Equation 3, $S_1$ denotes a suction pressure (mmaq) of the suction roller, and $S_2$ denotes a time (sec) required for the first preliminary porous film (C) to travel on the suction roller.

12. The system according to claim 11, wherein the electron beam irradiation device (300) is disposed at a distance of 100 cm or less from a central axis of the winder roller (200), and the electron beam irradiation unit (P3) is arranged toward the central axis of the winder roller (200).

13. The system according to claim 11 or 12, further comprising a loading unit (P1) and a transport unit (P2),

wherein the loading unit (P1) is configured to unwind the preliminary porous film (10) wound into a roll form and supply the preliminary porous film (10) to the transport unit (P2),

optionally further comprising a supply unit, the supply unit being adapted to extrude and stretch a raw material containing a polymer to form the preliminary porous film (10), and

preferably being further adapted to wind the preliminary porous film (10) in the roll form, and supply it to the loading unit (P1).

14. The system according to any one of claims 11 to 13, wherein the preliminary porous film (10) includes one or more of: polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-polychlorotrifluoroethylene (PVDF-CTFE), polyvinylidene fluoride-polyethylenetetrafluoroethylene (PVDF-ETFE), polyacrylonitrile (PAN), polyethylene terephthalate (PET), polybutylene terephthalate (PBT), polyethylene naphthalate (PEN), polyimide (PI), polyphenylene sulfide (PPS), polysulfone (PSF), polyethersulfone (PES), ethylene-vinyl acetate (EVA), and polycarbonate (PC).

15. Use of a system according to any one of claims 11 to 14 for controlling a degree of oxygen removal within pores of a preliminary porous film (10), optionally wherein the oxygen substitution degree of the first preliminary porous film (A/B/C) is 80% or more, 90% or more, or 95% or more, preferably wherein side reactions caused by oxygen during electron beam crosslinking are suppressed or reduced,

wherein the oxygen substitution degree is calculated as described in the description.

FIG. 1

S10A

Prepare vacuum atmosphere chamber
including electron beam irradiation
unit at rear end of the chamber

S20A

Introduce first preliminary porous film
(A) into vacuum atmosphere chamber

S30A

Irradiate first preliminary porous film (A) with
electron beam in electron beam irradiation unit

FIG. 2

S10B

Introduce first preliminary porous film (B)
into liquid treatment chamber filled
with or spraying non-reactive liquid

S20B

Irradiate second preliminary porous
film (B) discharged from liquid treatment
chamber with electron beam

[FIG. 3]

S10C

> Prepare inert gas atmosphere chamber including
> suction roller at front end of the chamber and
> electron beam irradiation unit at rear end of the chamber

S20C

> Introduce first preliminary porous film (C)
> into inert gas atmosphere chamber

S30C

> Irradiate first preliminary porous film (C)
> with electron beam in electron beam irradiation unit

FIG. 4

Electron Beam Irradiation

Vacuum
Atmosphere
Chamber

Unwinder                                                      Winder

FIG. 5

Electron Beam Irradiation

Unwinder

Liquid Treatment Chamber

Winder

FIG. 6

Electron Beam Irradiation

rt Gas Atmosphere Chamber

Unwinder

Liquid Treatment Chamber

Winder

FIG. 7

FIG. 8

FIG. 9

FIG. 10

FIG. 11